# EUROPEAN PATENT APPLICATION

(11) **EP 4 345 718 A1**
(43) Date of publication of application: **03.04.2024**
(21) Application number: 22857861.3
(22) Date of filing: 17.08.2022
(51) Int. Cl.: G06Q 10/10, G06F 3/0481, G06F 3/0484

(54) **SERVICE PROCESSING METHOD AND APPARATUS BASED ON ONLINE DOCUMENT, AND TERMINAL AND STORAGE MEDIUM**

(30) Priority: 18.08.2021 CN 202110950234; 07.09.2021 CN 202111046163
(71) Applicant: Beijing Zitiao Network Technology Co., Ltd., Beijing 100190 (CN)
(72) Inventor: WANG, Changming, Beijing 100086 (CN); YANG, Fan, Beijing 100086 (CN); ZHANG, Linna, Beijing 100086 (CN); LIN, Bingxi, Beijing 100086 (CN); GUO, Changyu, Beijing 100086 (CN); LIU, Fang, Beijing 100086 (CN); LIU, Zisheng, Beijing 100086 (CN); LAN, Tian, Beijing 100086 (CN); LIU, Fabin, Beijing 100086 (CN); ZHANG, Zhengzhe, Beijing 100086 (CN); HOU, Siyu, Beijing 100086 (CN); WANG, Yao, Beijing 100086 (CN)
(74) Representative: Dentons UK and Middle East LLP
(86) International application number: PCT/CN2022/113097
(87) International publication number: WO 2023/020550

(57) **Abstract**

The disclosure provides a method, apparatus, terminal and storage medium for service processing based on an online document. The method includes: determining a first application; establishing an association between the first application and a first online document; and performing a first processing on the first online document according to the information related to the first application. The information processing method provided by embodiments of the present disclosure can process the first online document based on the information related to the first application, so that the data processing of the first online document can adapt to the service logic of the first application itself. While fully utilizing the characteristics of openness and easy collaboration of the online document, the online document can reflect or adapt to the service logic, and improve the flexibility and stability of the service.

## Description

### CROSS REFERENCE

The present application claims priorities to Chinese Patent Application No. 202111046163.X which is filed on September 7, 2021 and entitled "Method, apparatus, terminal and storage medium for service processing based on online document " and to Chinese Patent Application No. 202110950234.2 which is filed on August 18, 2021 and entitled "Method, apparatus, terminal and storage medium for information processing", the entirety of which is incorporated herein by reference.

### FIELD

The present disclosure relates to the technical field of information processing, and more particularly, to a method, apparatus, terminal and storage medium for service processing based on online document.

### BACKGROUND

In some document processing scenarios, such as enterprise approval scenarios, documents, systems, qualification review, contract approval, etc. often rely on different information or document content as decision-making basis, requiring multi-party communication and collaboration. How to improve the efficiency of information processing in these scenarios is a problem that needs to be solved.

### SUMMARY

The present disclosure provides a method, apparatus, terminal and storage medium for service processing based on online document.

This disclosure adopts the following technical solutions.

In some embodiments, the present disclosure provides an information processing method comprising: determining a first application; establishing an association between the first application and a first online document; and performing a first processing on the first online document according to information related to the first application.

In some embodiments, the present disclosure provides a method for service processing based on online document comprising: in response to a first operation, displaying service data to be processed, wherein the service data to be processed is associated with a first online document; and in response to a second operation, processing the service data to be processed according to the first online document.

In some embodiments, the present disclosure provides a method for data processing based on online document, comprising: creating a service data template in response to a first creation event, wherein the service data template is used to generate a service processing form or a service processing flow, and the generated service processing form or service processing flow has a control for associating an online document.

In some embodiments, the present disclosure provides an apparatus for information processing, comprising: a determination unit configured for determining a first application; a creation unit configured for establishing an association between the first application and a first online document; and a control unit configured for performing a first processing on the first online document according to information related to the first application.

In some embodiments, the present disclosure provides an apparatus for service processing based on online document, comprising: a display unit configured for, in response to a first operation, displaying service data to be processed, wherein the service data to be processed is associated with a first online document; and a processing unit configured for, in response to a second operation, processing the service data to be processed according to the first online document.

In some embodiments, the present disclosure provides an apparatus for data processing based on online document, comprising: a creation unit configured for creating a service data template in response to a first creation event; and the service data template used to generate a service processing form or a service processing flow, and the generated service processing form or service processing flow has a control for associating an online document.

In some embodiments, the present disclosure provides a terminal comprising: at least one memory and at least one processor; the memory is used to store program code, and the processor is used to call the program code stored in the memory to execute the above method.

In some embodiments, the present disclosure provides a storage medium for storing program code, the program code for performing the method described above.

The information processing method provided by the present disclosure comprises: determining a first application; establishing an association between the first application and the first online document; performing first processing on the first online document based on the information related to the first application. The information processing method provided by embodiments of the present disclosure can process the first online document based on the information related to the first application, so that the data processing of the first online document can adapt to the service logic of the first application itself, and the data carried by the first online document or the processing of the data can reflect or adapt to the service logic of the first application. As such, on the one hand, when using the first application for service processing, the convenience of online collaboration and the like of the first online document can be utilized, and on the other hand, the service logic can be avoided to be destroyed due to the collaborative openness of the first online document, and the reliability of the service can be improved. In some embodiments of the present disclosure, a service processing method based on online document is proposed, in which service data has an association with the first online document and is processed according to the service data to be processed in the first online document. In this way, the online document can be referred to during the processing of the service data, making the process of service processing more convenient, reducing the storage resources required for the processing of service data using the diffusion of online documents, and improving the convenience of data modification. In a method for data processing based on online document in some embodiments of the present disclosure, a service data template is created based on the online document, and the service data template is used to generate a service processing form or service processing flow. In the generated service processing form or service processing flow, there is a control(s) for associating online documents. The service processing form or service processing flow associated with the online document can be generated through the service data template, so that the service processing form or service processing flow is associated with the online document and the convenience of processing is improved.

### BRIEF DESCRIPTION OF THE DRAWINGS

In conjunction with the accompanying drawings and with reference to the following detailed description, the above and other features, advantages and aspects of the various embodiments of the present disclosure will become more apparent. Throughout the drawings, like or similar reference numerals denote like or similar elements. It should be understood that the drawings are illustrative and that elements and elements are not necessarily drawn to scale.
FIG. 1 is a flowchart of an information processing method according to embodiments of the present disclosure.
FIG. 2 is a schematic diagram of a service data template according to an embodiment of the present disclosure.
FIG. 3 is a schematic diagram of a service data template according to an embodiment of the present disclosure.
FIG. 4 is a schematic view of display of service data according to an embodiment of the present disclosure.
FIG. 5 is a flowchart of an information processing method according to an embodiment of the present disclosure.
FIG. 6 is a schematic display of a target communication program according to an embodiment of the present disclosure.
FIG. 7 is a schematic display of a target communication program according to an embodiment of the present disclosure.
FIG. 8 is a schematic variation of a document display area according to an embodiment of the present disclosure.
FIG. 9 is a schematic diagram of non-full screen and full screen displays of a first online document in service data according to an embodiment of the present disclosure.
FIG. 10 is a schematic diagram of an apparatus for information processing according to an embodiment of the present disclosure.
FIG. 11 is a flowchart of a method for information processing according to an embodiment of the present disclosure.
FIG. 12 is a flow chart of the approval process and the filing process of the related art.
FIG. 13 is a flowchart of an approval filing process according to an embodiment of the present disclosure.
FIG. 14 is a schematic diagram of an apparatus for information processing according to an embodiment of the present disclosure.
FIG. 15 is a flowchart of a method for information processing according to an embodiment of the present disclosure.
FIG. 16 shows a schematic diagram of a processing flow according to some embodiments of the present disclosure.
FIG. 17 shows a schematic diagram of the flow design according to some embodiments of the present disclosure.
FIG. 18 and FIG. 19 show a schematic diagram of a notification message according to some embodiments of the present disclosure.
FIG. 20 is a partial module for an apparatus for information processing according to some embodiments of the present disclosure.
FIG. 21 is a schematic structural diagram of an electronic device according to embodiments of the present disclosure.

### DETAILED DESCRIPTION

The following embodiments of the present disclosure will be described in more detail with reference to the accompanying drawings. Although certain embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and embodiments of the present disclosure are for illustrative purposes only and are not intended to limit the scope of the present disclosure.

It should be understood that the various steps described in the method implementation method of this disclosure can be executed in parallel. In addition, the method implementation method can include additional steps and/or omit the steps shown. The scope of this disclosure is not limited in this regard.

The term "including" and its variations used in this article are open-ended, i.e. "including but not limited to". The term "based on" means "at least partially based on". The term "one embodiment" means "at least one embodiment"; the term "another embodiment" means "at least one additional embodiment"; and the term "some embodiments" means "at least some embodiments". Relevant definitions of other terms will be given in the following description.

It should be noted that the concepts of "first" and "second" mentioned in this disclosure are only used to distinguish different devices, modules, or units, and are not used to limit the order or interdependence of the functions performed by these devices, modules, or units.

It should be noted that the modification of "one" mentioned in this disclosure is illustrative and not restrictive. Those skilled in the art should understand it as "one or more" unless otherwise specified in the context.

The names of the messages or information exchanged between multiple devices in this public implementation are for illustrative purposes only and are not intended to limit the scope of these messages or information.

The following in conjunction with the accompanying drawings, embodiments of the present disclosure provide a detailed description.

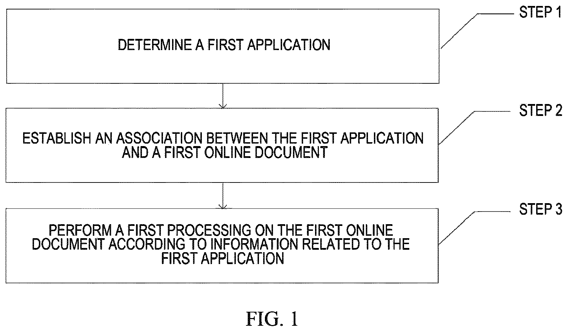

This disclosure provides an information processing method. As shown in FIG. 1, the method comprises:
Step 1: determine a first application.

In some embodiments, the first application may be associated with a first service logic, the first application may process service data of the first application according to the first application service logic. Specifically, the first service logic may include one or more of the sequence, processing flow and processing method set in the first application for processing service data of the first application.

Step 2: establish an association between the first application and the first online document.

In some embodiments, there are various ways to establish the association between the first application and the first online document. For example, the first online document can be added to the first application, or a link to the first online document can be added to the first application, or the content of the first online document can be automatically displayed when the first application is opened. The present disclosure is not limited in this regard. The first online document can be a text document or a table document, or a mixed document of text documents and table documents. The form of the online document disclosed in this disclosure is not limited. For example, it can be a text document, a table document, a multimedia document, etc. The application includes a series of instructions and/or data sets running on electronic devices such as personal computers (PCs), mobile terminals, virtual reality (VR) devices, and enhanced display (AR) devices for providing specific services or performing predetermined data processing.

Step 3: perform a first processing on the first online document according to the information related to the first application.

In some embodiments, the first processing can be applied to the first online document according to the identification, type and related information of service nodes of the first application. For example, it is possible to set the owner of the first online document, the permission assignment of the first online document, etc. In this way, the data processing of the first online document can adapt to the service logic of the first application itself, and the data carried by the online document can reflect or adapt the service logic. On the one hand, when using the first application for service processing, the convenience of online collaboration and the like of online documents can be utilized, and on the other hand, it can prevent the service logic from being destroyed, e.g., due to the collaboration openness of online documents and the like, thereby improving the reliability of services.

In some embodiments of the present disclosure, performing a first processing on the first online document according to information related to the first application comprises at least one of: processing at least one of display information, permission information or carried content data of the first online document according to a service node of the first application; processing at least one of a displayable content, a display format, and permission information of the first online document for a person (the person in the personal information) associated with a service node of the first application according to information of the person; or generating the first online document or processing the carried content data of the first online document according to first application data associated with a service node of the first application..

In some embodiments, the display information of the first online document may include information such as display size, display range, and display position of the first online document, and the permission information of the first online document may include permission to view, permission to edit, etc. The data carried by the first online document may include data displayed in the first online document and data that can be accessed. The first application may have associated service processes, which may include one or more service nodes. According to the current service node, at least one of the display information, permission information, and carried content data is processed, so that different service nodes can have different display information, permission information, and content data carried inside, which can match the display of the first online document with the needs of the service node and meet the needs of permission control and content control of different service nodes. The service node may have one or more associated persons, and the personal information may include the position of the associated person, responsible service data, etc. The service data associated with the service node may include matters that need to be processed by the service node. Processing the displayable content of the first online document according to the personal information associated with the service node can prevent information leakage of the first online document, and processing the display format can match the display format of the first online document with the display format used by the associated person, thereby improving the reading experience. Processing the permission information can prevent tampering with the data of the first online document. In some embodiments, the first application data associated with the service node can be data that the service node needs to process. Generating the first online document based on the first application data or processing the content data carried by it can make the data in the first online document reflect the content of the service node. For example, the first application data associated with the service node can be recorded in the content data carried in the first online document, such as recording the processing result of the first online document provided by the associated person of the service node.

In some embodiments of the present disclosure, after establishing the association between the first application and the first online document, a document display area for displaying the first online document is displayed in the display interface of the first application. In some embodiments, the display interface of the first application can be a display interface for displaying service data of the first application, and the document display area is displayed in the display interface of the first application. The first online document can be displayed in the document display area, so that during the operation of the first application, the first online document can be viewed at any time to refer to the content of the first online document in real time. In some embodiments of the present disclosure, the document display area can present the content of the first online document and browse the content of the first online document according to the operation. The size of the document display area may not present all the contents of the first online document at once, so the content of the first online document can be browsed according to the operation, making it convenient for the user to view the first online document as needed. The content of the first online document can be content data carried by the first online document.

In some embodiments of the present disclosure, the display size and/or position of the document display area in the display interface can be adjusted. In some embodiments, the display size can be adjusted when the document display area is in the unfolded state. In some embodiments, the service data of the first application can be displayed in the display interface, and the document display area can be displayed in the display interface, and the position and size of the document display area can be adjusted as needed to facilitate the user to display as needed. In some embodiments, an object such as a View class can be set in the display interface as a display container, and the display container has an initial height and a maximum height. The internal connection frame (such as an iframe component) is set in the display container, and the internal connection frame is used as the document display area. The position of the document display area can be changed by controlling the display container through the View class object as an operation element. Trigger the first event by clicking on the operation element, enter the drag mode at this time, and record the position of the control identification at this time. Trigger size adjustment events such as dragging or sliding in the drag mode. Calculate the position difference between the obtained position and the position when entering the drag mode (such as the position difference in the height or width of the document display area) based on the position difference and the size of the display container (such as height or width) to obtain the adjusted size of the display container, and verify the safety threshold of the adjusted size. If it exceeds the maximum threshold or is less than the minimum threshold, the adjusted size is equal to the maximum threshold or minimum threshold, and then the size of the display container is set to the adjusted size. The last size when the control identification stops its control can be used as the size of the display container, and the drag mode terminates.

In some embodiments of the present disclosure, the size adjustment frequency of the document display area is not higher than a first predetermined frequency. In some embodiments, the size adjustment frequency can be the number of size adjustments per unit time which can be one second or other duration, for example. The size adjustment frequency is the number of times the size of the document display area is adjusted, and the size adjustment frequency is not higher than the first predetermined frequency. This prevents excessive adjustment times per unit time which would cause lags. When the size adjustment frequency per unit time is higher than the first predetermined frequency, it also means that the adjustment is likely not performed by the user because the speed that can be adjusted by hand will not too fast. Thus, there will be no response to the size adjustment operation that exceeds the first predetermined frequency. In some embodiments, when the size adjustment frequency of the document display area exceeds the second predetermined frequency, the display interface is not refreshed. In this way, by reducing the number of refreshes of the display interface, the consumption of resources is reduced, and when the size adjustment frequency exceeds the frequency threshold, the human eye can hardly recognize the size change. Therefore, the display interface cannot be refreshed.

In some embodiments of the present disclosure, when the length of the document display area in the first direction is greater than the predetermined length, in response to the first predetermined operation, the length of the document display area in the first direction is adjusted according to the first predetermined operation. In some embodiments, the first direction of the document display area can be the height direction (vertical direction) or the width direction (horizontal direction). For example, the first side of the document display area can be the head of the document display area, and the second side can be the tail of the document display area. When the distance between the first side and the second side is greater than the predetermined length, it indicates that the area occupied by the document display area is too large. At this time, the first operation can be performed to reduce the display size of the document display area without selecting the document display area. The first predetermined operation can be an operation of scrolling the mouse wheel, for example, by scrolling the mouse wheel up to quickly retract the document display area. Thus, when the document display area display size is too large, by directly performing a first predetermined operation, the display size of the document display area can be directly reduced. In some embodiments, the document display area may be performed after the first predetermined operation length in the first direction reaches a predetermined stop length, stop reducing the length in the first direction.

In some embodiments of the present disclosure, the method further comprises: in response to the control identification moves to a first or second side of the document display area, changing the style of the control identification. The control identification can be used to change the style after changing the position of the first side or the second side to change the size of the document display area. In some embodiments, the control identification can be a mouse, and the first or second side can be the edges of the top and bottom of the document display area, respectively. After the document display area is selected, the style of the control identification can be changed in response to the control identification moving to the first or second side of the document display area. The document display area can be selected by hovering the control identification in the document display area for more than a predetermined time. After the document display area is selected, the display style of the document display area can be changed, such as changing the style of the border of the document display area, and then the control identification can be moved to the first or second side. Moving to the first or second side here can refer to moving to the predetermined range of the first or second side. For example, a hot zone can be set for the first or second side. When the control identification moves to the hot zone of the first or second side, it is determined that the control identification has moved to the first or second side. When the control identification moves to the first or second side, it indicates that the user wants to adjust the first or second side. Therefore, the style of the control identification is controlled to change, and such a change is a kind of feedback so that the user can be aware that he/she now is able to control the first or second side. After the change happens, the position of the first or second side can be changed via the control identification, so that the user can freely adjust the size of the document display area.

In some embodiments, the document display area has a folded state and an unfolded state, and the document display area can switch between the folded state and the unfolded state. In some embodiments, the folded state can be a state where only brief information such as the name of the first online document, the classification of the first online document, and the modification date of the first online document is displayed without displaying specific content. At this time, the display size of the document display area can be a predetermined minimum value, and the unfolded state can be a state where more content of the first online document is displayed. In some embodiments, when the document display area is in the unfolded state, the content data carried by the first online document is displayed, for example, it can be a state where at least a portion of the content carried by the first online document is displayed. When the document display area is in the folded state, the content data carried by the first online document can be hidden, that is, the content data carried by the first online document cannot be displayed. When the document display area is in the unfolded state, the size of the document display area is larger than that in the folded state. The display size in the unfolded state can be set or can be a default value. By setting the folded and unfolded states, the users are allowed to reduce the display area occupied by the first online document when they make no reference to the first online document.

In some embodiments, the document display area has an associated display control identification. The display control identification may be a control. The display control identification may be displayed in the document display area or at a fixed position of the display interface of the first application, for example, always fixed at the top or bottom of the screen, without changing as the content of the display interface changes. When displayed in a fixed position of the display interface, it will not change with those operations that will change the content of the display interface such as scrolling of the mouse. The display control identification can always be fixed predetermined position of the display interface. The predetermined position can be pre-configured or specified by the user at any moment. The display interface can automatically be located to the document display area after the display control identification is triggered, so that the user can quickly locate to the document display area no matter where he/she is in the user interface. While the document display area is in the unfolded state, the document display area is folded by triggering the display control identification. While the document display area is in the folded state, the document display area is unfolded by triggering the display control identification. In some embodiments, the unfolded state may display the content of the first online document and possibly also display the title, author and other associated information. In the folded state, the content of the first online document can be hidden, and the abbreviation information of the first online document can be displayed. The abbreviation information may include title, author, etc.

In some embodiments of the present disclosure, the size range of the document display area predetermined. The control method comprises: determining a target size according to an operation of adjusting the document display area, adjusting a display size of the document display area according to the target size; if the target size is greater than a maximum value of the size range, setting the size of the document display area to the maximum value of the size range; or if the target size is smaller than a minimum value of the size range, setting the size of the document display area to the minimum value of the size range. In some embodiments, after the user performs an adjustment operation on the target display area, the target size is first determined according to the adjustment operation. If the target size is within the size range, the display size of the document display area can be directly adjusted to the target size. If the target size is outside the size range, the display size of the document display area is set to the maximum or minimum value of the size range. By setting the size range, the problem of insufficient display area utilization caused by the document display area being adjusted too large or too small can be prevented.

In some embodiments of the present disclosure, the display size of the document display area is determined by: determining a reference size according to a data amount of content data carried by the first online document; if the reference size is within a predetermined size range, setting the display size of the document display area according to the reference size; if the reference size is greater than a maximum value of the size range, setting the display size of the document display area according to the maximum value of the size range. In some embodiments, the method for determining the display size of the document display area described above can be used to determine the display size of the document display area in an unfolded state, and specifically can be used to determine the display size of the document display area when an operation to adjust the display size of the document display area is not performed. The display size of the document display area can be determined based on the data amount carried by the first online document. When the data amount carried by the first online document changes, the display size of the document display area can be automatically adjusted, and a predetermined size range can be set to avoid the display size of the document display area being too large affecting the user's access to other content of the first application.

In some embodiments of the present disclosure, processing the permission information of the first online document comprises: in response to establishing the association, or processing the first online document using the first application, assigning ownership of the first online document to the first application. In some embodiments, when establishing the association or predetermined processing using the first application, it may include at the beginning of processing, during processing, at the end of processing, or within a predetermined time after processing. In some embodiments, during processing of the first application, it is necessary to ensure that the first document data is not modified by users unrelated to the first application, so ownership of the first online document can be assigned to the first application when establishing the association or processing the service data of the first application, thereby preventing the first online document from being tampered with. Alternatively, in some embodiments, according to the person associated with the service node of the first application, predetermined permission are assigned to the associated person, and other person than the associated person are prohibited from having predetermined permission (such as permission to edit), or the validity of predetermined permission is set according to the processing stage, for example, the person permission to edit of the current service processing node with permission to edit are valid, other person do not have permission to edit, or permission to edit are invalid in the service processing stage.

In some embodiments of the present disclosure, processing the permission information of the first online document comprises: after performing the first processing on the first online document, assigning ownership of the first online document to the creator of the service data of the first application, or assigning ownership of the first online document to the owner of the first online stable document before establishing an association with the first application. In some embodiments, the creator of the service data of the first application can be the original owner of the first online document, and after the service data of the first application is processed, the ownership is returned from the first application to the creator. In some embodiments, after assigning ownership to the first application, the creator can retain the permission to view of the first online document, but not the permission to edit. In other embodiments, the creator is not the original owner of the first online document, and therefore, after the first processing of the first online document, the ownership of the first online document needs to be returned to the original owner, who is the owner of the first online document before establishing an association.

In some embodiments of the present disclosure, processing the permission information of the first online document comprises: after associating the first online document with the archive address of the document storage center, assigning ownership of the first online document to a predetermined person. In some embodiments, before, during, or after performing the first processing on the first online document, the first online document is associated with the archive address of the document storage center, for example, storing the first online document to the archive address of the document storage center. The predetermined person can be a manager of the document storage center. By assigning ownership to the predetermined person or predetermined program, the first online document can be prevented from being tampered with after archiving.

In some embodiments of the present disclosure, processing the permission information of the first online document, comprising: adjusting the permission information associated with the first online document according to the operation type of the service node and/or the associated person of the service node information. In some embodiments, the first online document can be processed according to the service process associated with the first application, and the service process can include one or more service nodes. The permission information of the first online document can be related to the current service node, for example, the service node that needs to be approved can open permission to view, and the service node that does not need to use the first online document cannot open permission to view. In other embodiments, the permission information of the first online document can be related to the operation type of the person associated with the current service node. For example, the person associated with the current service node perform a rejection operation on the processing request for the service data associated with the first online document, and the permission to edit of the person associated with the first online document can be closed. If the person associated with the current service node perform a handover operation to transfer the service data associated with the first online document to other person, the permission to view of the first online document can be opened to the transferred person.

In some embodiments of the present disclosure, adjusting the permission information associated with the first online document according to the operation type of the current service node and/or the associated person of the current service node comprises at least one of (a) - (d):
(a) in response to a first processing of the current service node, modifying an owner of the first online document;
   In some embodiments, after the owner of the first online document is assigned to the first application, if the first processing is performed, the owner of the first online document can be modified according to the first process. For example, the first online document owner can be modified from the first application to other programs or person, so that ownership of the first online document meets the needs of service processing.
(b) in response to a second processing of the current service node, withdrawing a predetermined document permission of the associated person of the predetermined processing node.
   In some embodiments, the predetermined processing node may be one or more, the predetermined document permission may be permission for the first online document such as the permission to views or the permission to edit. By performing a first processing to withdraw the predetermined document permission, the first online document can be prevented from being tampered with or to meet specific confidentiality requirements after the first online document is modified.
(c) in response to a third processing of the current service node, assigning a corresponding permission for the first online document to a second person based on the first person's permission for the first online document, and retaining the first person's permission for the first online document, or withdrawing the first person's permission for the first online document, or changing the first person's permission for the first online document. The first person includes a person associated with the current service node, and the second person includes a person associated with the third processing.
   In some embodiments, by performing the third processing, the second person may be assigned permission for the first online document, so that when the second person needs to assist in processing the first online document, the second person to facilitate the first online document, for example, reading and other operations.
(d) in response to a fourth processing of the current service node, assigning a predetermined document permission to person associated with the fourth processing.

In some embodiments, the fourth processing may be associated with a person, for example, the fourth processing may be a sharing processing, by performing the fourth processing, predetermined document permission associated with the person may be given, for example, the predetermined document permission may be permission to views.

In some embodiments of the present disclosure, retaining may refer to retaining all or part of permissions unchanged, withdrawing may refer to withdrawing all or part of the permissions, and changing may refer to changing all or part of the permissions including changing the permission type, the permission valid period, etc.

In some embodiments of the present disclosure, adjusting the permission information associated with the first online document according to the operation type of the current service node and/or the associated person of the current service node comprises the at least one of (a) - (i) as below:
(a) in response to the creator of the service data withdrawing the processing request for the service data of the first application, withdrawing the permission of the associated person of the service node associated with the processing request to the first online document.
   In some embodiments, the creator of the service data withdrawn the processing request for the service data, there is no need for person associated with the service node to process the service data, and therefore, the associated person of the service node will withdraw the permission of the first online document to prevent the first online document from being tampered with.
(b) in response to the creator of the service data withdrawing the processing request for the service data of the first application, resetting the permission of the first online document. When the creator withdraws the processing of the service data of the first application, the first service logic terminates. It is necessary to reset the permission of the first online document, for example, resetting the permission setting of the first document to the state before being associated with the first application, or returning the permission of the first online document to the original owner of the first online document. In some embodiments, the permission of the associated person of all service nodes to the first online document can also be withdrawn together.
(c) in response to the creator of the service data withdrawing the processing request for the service data of the first application, assigning ownership of the first online document to the creator, or assigning ownership of the first online document to the owner of the first online document before establishing an association between the first online document and the first application.
   In some embodiments, if the creator withdraws the processing of the service data of the first application, ownership of the first online document can be assigned to the creator or returned to the owner of the first online document before establishing the association, and the permission for the first online document of all persons of the service node can be withdrawn.
(d) in response to the associated person of the service node rejecting the processing request for the service data of the first application, withdrawing the permission for the first online document of the associated person of the service node.
   In some embodiments, after rejecting the service data of the first application, it also indicates that the first service logic is terminated. Therefore, it is necessary to withdraw the permission of the first online document. In some embodiments, the document ownership can also be given to the creator after rejecting the processing request for the service data.
(e) in response to the associated person of the service node transferring the service data of the first application to another person, assigning corresponding document permission to the another person.
   In some embodiments, when the service data of the first application is transferred to another person, it is instead processed by the another person. In this situation, the another person needs to process based on the first online document. Thus, it is necessary to assign the corresponding document permission. In some embodiments, the permission of the another person should not exceed the permission of the person who do the transfer. The document permission assigned to the another person can be the same as the permission of the person associated with the current service node to the first online document, that is, the permission of the person of the service node can be applied to another person. The document permission assigned to another person can also be a subset of the permission of the person associated with the service node to the first online document. In some embodiments, the permission to the first online document of the person associated with the service node can be retained.
(f) In response to the service node being added by the associated person of the service node, assigning the corresponding document permission to an associated person of the added service node based on the permission for the first online document of the associated person of the service node.
   In some embodiments, after a service node is added, the associated person of the added service node may need to access or edit the first online document. Thus, it is necessary to assign corresponding permission for the first online document. However, because the service node is created by the associated person of the service node, permission for the first online document should not exceed that of the associated person of the service node. In some embodiments, after the service node is added, the permission for the first online document of the associated person of the service node are retained or changed.
(g) In response to removal of a service node, withdrawing or changing permission for the first online document of the associated person of the removed service node.
   In some embodiments, after the service node is removed, the associated person of the removed service node no longer processes the service data of the first application, so it is necessary to withdraw the permission assigned to the associated person of the removed service node or change the permission of the associated person of the removed service node. For example, for the associated person of the removed service node, the permission of the first online document is changed from the permission to edit to the permission to view.
(h) in response to the associated person of the service node rolling the processing flow back to the previous service node before the service node, assigning the corresponding document permission to the associated person of the previous service node.
   In some embodiments, the permission is assigned to the associated person of the service node being rolled back to according to the node type of the service node being rolled back to or the permission configuration of the service node being rolled back to. In other embodiments, a permission for the first online document can be assigned to the associated person of the previous service node according to permission for the first online document of the associated person of the service node. For example, all or part of the permission for the first online document of the associated person of the service node can be applied to the associated person of the previous service node.
(i) assigning a predetermined permission for the first online document to a third person in response to the service data of the first application being copied or shared with the third person.

In some embodiments, the service data may be copied or shared. The third person is copied or shared with a first online document service data of the first application has a predetermined permission. For example, the predetermined permission may be a permission to view, so that the third person may be based on the predetermined permission to perform operations on the first online document, thereby performing the service processing based on the operations of the first online document.

In some embodiments of the present disclosure, during the first processing of the first online document, the associated person in the current service node who have permission to edit for the first online document can edit the first online document, and the associated person who are not currently in the service node or do not have permission to edit for the first online document cannot edit the first online document. In some embodiments, the valid period of the permission for the first online document of the associated person of the service node is related to the duration of the service node. During the processing period of the service node, the associated person of the service node is given valid permission for the first online document. Outside the processing period of the service node, the associated person of the service node is given invalid permission for the first online document or changed to other permission. In order to prevent the first online document from being tampered with during the processing of a certain service node, only the current service node can edit the first online document, and the person who edits the first online document must have the permission to edit for the first online document. After the service data of the first application is processed, the permission assigned to the person of the service node can be withdrawn, or the permission for the first online document can be changed to permission to view. In some embodiments, for the persons who are not of the current service nodes, if they have a permission to view or permission to edit for the first online document, they can read the first online document during the processing of the service data of the first application but cannot edit. If there is no permission to view, the first online document cannot be viewed. Therefore, by retaining the permission to view of relevant persons, they can understand the information related to service processing. By making the permission to edit invalid or changed to permission to view based on the service processing flow, the service data can be prevented from being tampered with. In some embodiments, for an associated person of the service node, if he has permission to edit for the first online document, when the service node of the associated person is not the current service node, his permission to edit for the first online document can be changed to permission to view, or it is possible to specify that the permission to edit for the first online document is only turned on when the service processing node of the associated person is the current service processing node, and the rest of the time, only permission to view can be turned on.

In some embodiments of the present disclosure, the permission for the first online document of the person associated with the service node can be opened in at least one of the following ways: adding the person associated with the service node as a collaborator of the first online document and assigning a predetermined permission; or opening the link sharing function of the first online document, the link sharing function is used to indicate that the user who obtains the sharing link of the first online document has a predetermined permission, and the user who obtains the sharing link can access the first online document based on the access restriction conditions of the link sharing. In some embodiments, the access restriction conditions may include entering a predetermined password to access, or the user's attributes meet predetermined conditions to access, such as the organization identifier associated with the user, the department identifier, etc. to access when the predetermined conditions are met.

In some embodiments of the present disclosure, after performing the first processing on the first online document based on the information related to the service node of the first application, the permission for the first online document of the associated person of the service node are withdrawn. In some embodiments, after the first processing is performed, the permission for the first online document is revoked, and the permission for the first online document of each person can be restored to a state before the first application is determined, thereby preventing the associated person from tampering with the first online document.

In some embodiments of the present disclosure, the content data carried by the first online document includes processing abstract information, where the processing abstract information is used to characterize the information related to the service process.

In some embodiments, the processing abstract information may be information related to service processing, and the processing abstract information characterizes the service processing information, including at least one of the following: a link of the processing node or the first application, processing progress information, processing time information, handler information, and a document change record of the first online document. In some embodiments, the processing flow of the first application and the status of each processing node can be understood by processing the abstract information, so as to facilitate the associated person of the current service node to process the first online document with reference to the processing abstract information.

In some embodiments of the present disclosure, processing the content data carried by the first online document according to the service node of the first application comprises: updating the processing abstract information according to a processing operation of the service data by an associated person of the service node of the first application. In some embodiments, the processing abstract information is related to the processing of the processing node, and the processing abstract information can change with the processing of the processing node, so that the processing abstract information can reflect the processing of the first online document.

In some embodiments of the present disclosure, processing the content data carried by the first online document according to the service node of the first application comprises: displaying the processing abstract information or a link to the processing abstract information within the first online document. The processing abstract information can be updated according to the processing operation of the service data by the associated person of the current service node. In some embodiments, the processing abstract information can be displayed directly in the first online document, or it can be a link to display the processing abstract information, and the processing abstract information is displayed after the link is triggered.

In some embodiments of the present disclosure, processing the content data carried by the first online document according to the service node of the first application comprises: displaying, within the first online document, a portion of the processing abstract information for which an associated person of a current service node has a permission to view. The processing abstract information can be updated according to the processing operation of the associated person of the current service node on the service data. In some embodiments, the processing abstract information may be included in the first online document, but whether to display the processing abstract information needs to be determined according to the permission of the associated person of the current service node, and only the portion where the associated person of the current processing node have viewing permission is displayed.

In some embodiments of the present disclosure, processing the abstract information according to the current processing node comprises displaying a second document or a link to a second document within the first online document, the second document recording the processing abstract information. The second document can be updated according to the processing operation of the service data by the associated person of the current service node. In some embodiments, the processing abstract information may be displayed in the second document, and the second document may be displayed in the first online document or linked to the first online document.

In some embodiments of the present disclosure, processing the abstract information according to the current processing node comprises displaying the processing abstract information in the first online document after the first processing of the first online document is completed. In some embodiments, the processing abstract information may not be displayed during processing of the first online document, and the processing abstract information may be displayed after processing is completed to achieve complete display of information.

In some embodiments of the present disclosure, establishing an association between the first application and the first online document comprises: in response to an operation of establishing the association, determining whether the creator of the service data of the first application is the owner of the first online document; if so, establishing the association; if not, displaying a prompt message. In some embodiments, the first processing is performed on the service data of the first online document based on the information related to the service node of the first application. Thus, it is necessary to ensure that the creator of the service data of the first application has sufficient permission for the first online document. From this requirement, only if the creator of the service data of the first application is the owner of the first online document, the association between the first application and the first online document can be established. Otherwise, the association cannot be established, and prompt information is displayed.

In other embodiments of the present disclosure, in response to the operation of establishing the association, it is determined whether the creator of the service data of the first application has the permission assigned by the owner of the first online document; if so, the association is established; if not, prompt information is displayed. In some embodiments, when establishing the association, if the creator has the permission assigned by the owner, the association between the first application and the first online document can be established, otherwise the association cannot be established, and prompt information can be displayed.

In some embodiments, at least one of the following is displayed in the prompt information: contact information of the owner of the first online document, a service card of the owner of the first online document, a control for contacting the owner of the first online document after being triggered, an entrance for applying to the owner for transferring ownership, or an entrance for applying to the owner for associating the first online document with the first application. In some embodiments, when the creator of the service data of the first application is not the owner of the first online document, the association between the first application and the first online document cannot be established. Therefore, at this time, information related to the owner of the first online document can be displayed to facilitate contacting the owner of the first online document, thereby obtaining ownership of the first online document and realizing the association between the first application and the first online document. It is also possible to display the entrance for applying to the owner for transferring ownership or the entrance for applying to the owner for associating the first online document with the first application, thereby shortening the operation path of the creator.

In some embodiments of the present disclosure, the method further comprises: in response to the entrance for applying for transferring ownership being triggered or the application entrance for applying for associating the first online document with the first application being triggered, sending a notification message to the owner, the notification message comprising at least one of: information of the first application, information of the first online document, or remark information of the creator. In some embodiments, after the entrance for transferring ownership is triggered, an application for transferring ownership of the first online document is sent to everyone, and after the application entrance for associating the first online document with the first application is triggered, an application for associating the first online document with the first application is sent to the owner. Therefore, in order to facilitate the owner to determine whether to transfer ownership and associate the first online document with the first application, a notification message needs to be sent to the owner of the first online document to facilitate the owner of the first online document to determine whether to transfer ownership of the first online document and associate the first online document with the first application.

In some embodiments of the present disclosure, establishing an association between the first application and the first online document may comprise: adding a first online document to a display interface of the first application or pre-configuring the association between the first application and the first online document. In some embodiments, the display interface of the first application may be a display interface of the service data of the first application, that is, the first online document may be added to the service data of the first application, a link to the first online document may be added to the display interface or the content of the first online document may be directly displayed, and the association between the first application and the first online document may be pre-configured according to system or user settings.

In some embodiments of the present disclosure, establishing an association between the first application and the first online document further comprises: determining a first archive address associated with the service data template of the first application, wherein the first archive address is an archive address of a document storage center, and the first archive address is used to associate with a target online document, the target online document being an online document associated with service data established based on the service data template; at a predetermined timing, associating the first online document with the first archive address.

In some embodiments, a service data template can be established in advance, for example, by configuring the service data template by a system administrator at back end. The service data template may be configured with an associated archive address, so that the processing request for the service data is established based on the service data template. The associated first online documents are all stored in the specified archive address, so that the specified type of service data such as a specified type of approval forms can be automatically archived to the archive address, thereby avoiding errors caused by manual selections by the associated persons of the processing node.

In some embodiments of the present disclosure, establishing an association between the first application and the first online document further comprises: in response to an operation of adding the first online document in the display interface of the first application, displaying an archive address selection page of the document storage center, and associating the first online document with the second archive address at a predetermined timing according to the selected second archive address.

In some embodiments, the archive address can be manually selected by an associated person, and the first online document can be stored to the second archive address. In other embodiments, the first archive address of the online document can be set in the service data template, and the second archive address is determined based on the first archive address. The second archive address can be a sub-address in the first archive address. For example, the first archive address can be a larger range, and the second archive address is the address selected in the first archive address. It is possible to not only ensure the relative accuracy of the archive address, but also maintain a certain flexibility.

In some embodiments, the predetermined timing comprises reaching or completing a predetermined service node of the first application, such as reaching the archive node, reaching the predetermined archive time after approval is completed, or completing the service data processing request such as completing the approval request. In some embodiments, by setting the predetermined timing, the first online document can be stored only if the service process reaches the predetermined service node, achieving phased storage. This can be used as data preservation in the processing process to facilitate data verification later.

In some embodiments, the method further comprises: in response to the creation operation, setting the document permissions of the service node of the first application and the person associated with the service node. In some embodiments, the creation operation can be an operation to create the service data of the first application. In some embodiments, the first application can include one or more service nodes, and the person associated with the service node can be a handler who processes the service data of the first application, such as auditors. Different service nodes or different persons may have different document permissions for the first online document. The document permissions can be divided into permission to views and permission to edit. In some embodiments, the document permission of the person associated with the service node is set according to at least one of: a function of the service node, a role of the associated person, a type of the first online document, or a type of the first application. For example, if the function of the service node is auditing, it can only open document permission to read. If the function of the service node includes data processing, it can open document permission to edit. The role of the associated person can be, for example, auditing role, data processing role, etc. In some embodiments, the first application has a type, and the type can correspond to a degree of confidentiality. For example, different levels can be set for different types of applications, and different levels can be set for person. The first type of application corresponds to level 1. For online documents associated with the application of level 1, persons of level 1 have permission to edit for them. For online documents associated with the application of level 2, persons of level 1 only have permission to view for them.

In some embodiments of the present disclosure, prior to determining the first application, the method further comprises: creating a service data template having a control for adding an online document, all or part of service data of the first application established based on the service data template. In some embodiments, a service data template is established in advance, and part or all of the service data of the first application is established based on the service data template. The first online document can be added based on the control of the online document. By setting the service data template, the creation process of service data is simplified, and the unified specification of service data is ensured.

In some embodiments, the first online document is processed based on the information related to the service node of the first application, wherein the information related to the service node includes at least one of the following: a service node, information of an associated person of the service node, or service data associated with the service node. In some embodiments, the information related to the service node can record which service nodes are there (service nodes), the persons associated with the service node such as handlers, and the service data to be processed at the service nodes.

In some embodiments of the present disclosure, if there is a first person associated with two or more service nodes of the first application, the following processing can be included: after the first person processes the first online document at the associated first service node, if the content of the first online document changes before the start of the second service node associated with the first person, the first person still needs to process the first online document at the second service node; or, after the first person processes the first online document at the associated first service node, if the content of the first online document does not change before the start of the second service node associated with the first person, the first person does not need to process the first online document at the second service node.

In some embodiments, the first person is associated with at least two service nodes, so it processes the first online document in the first service node. If the first online document does not change before the start of the second service node, it will not be repeatedly processed, thereby reducing manpower waste. If the first online document changes, for example, a person edit the first online document, it still needs to be processed in the second service node afterwards. In some embodiments, the content of the first online document can be related to its version number, so it can determine whether the content of the first online document has changed based on the version number of the first online document. This does not require detection of the full text of the first online document. If the version number of the first online document changes, it is determined that the content of the first online document has changed. Alternatively, if the version number of the first online document does not change, it is determined that the content of the first online document has not changed.

In some embodiments of the present disclosure, the first application is associated with a first service logic, the first application processes the service data of the first application according to the first service logic, and the first processing performed on the first online document is related to the first service logic. In some embodiments, the first service logic of the first application may include at least one of a processing flow, processing rules, and the like of the first application.

In some embodiments of the present disclosure, based on the role of the service node in the service logic, a first processing of the first online document based on information related to the service node. In some embodiments, different roles of the service node in the service logic may be different, different service nodes may require different processing of the first online document, the first online document is processed based on information related to the service node, so that the processing of the first online document matches the service logic.

In some embodiments, the first application may be presented in various forms, such as a standalone application, or embedded or based on subroutines in other programs, applets, etc. The first application may be an applet of the target communication software.

In some embodiments of the present disclosure, the information processing method further comprises: displaying the service data of the first application in a control of the target communication software of the handler of the service node of the first application. In some embodiments, the target communication software can be predetermined to communicate with the first application, so that the service data of the first application can be displayed in the target communication software. For users who do not have access to the first application, the service data of the first application can be processed through the target communication software. In some embodiments, some persons may not have access to the first application and cannot submit the service data of the first application. With the permission diffusion capability of online documents, users who do not have permission can complete the submission of service data.

In some embodiments of the present disclosure, the first application may be an approval procedure, and the information related to the service node includes more than one approval node and the persons associated with the approval node such as the approver, persons who are copied, persons who submit the bills (persons who submit the approval applications), etc. Specifically, the approval procedure may be an approval procedure for the service, such as qualification approval procedures, contract approval procedures, etc.

In some embodiments of the present disclosure, the first application may be a reporting program, and the related information of the service node includes more than one reporting node and the reporting node associated person such as persons who are reported to, the persons who are copied, and the like.

In some embodiments of the present disclosure, the first application includes a project management program, and related information of the service node includes more than one project processing node and/or persons associated with the project processing node. For example, the project management program may be a project management program within the enterprise.

In some embodiments of the present disclosure, there is also proposed an online document-based service processing method, comprising: in response to a first operation, displaying service data to be processed, wherein the service data to be processed has an association with the first online document; and in response to a second operation, processing the service data to be processed according to the first online document.

Specifically, the approval processing method based on online documents can be used for terminals such as servers, computers, tablets, mobile phones, etc. The first operation may include one or more data, such as an operation of opening a processing program for service data, which can be an approval program. After the first operation is performed, the service data to be processed is displayed. The service data to be processed can be service data that needs to be approved. The current user can be an approver who approves the service data. The current user can perform the second operation to process the service data based on the first online document, such as agreeing, rejecting, rolling back to the previous node, etc. In some embodiments, by associating the first online document with the service data, the diffusion capability of the online document can be utilized to facilitate the user to process the service data.

In some embodiments of the present disclosure, processing the service data to be processed according to the first online document comprises: the second operation is performed based on the first online document, content and/or permission information of the first online document is related to a service node associated with the service data to be processed and/or an associated person of the service node. In some embodiments, the second operation can be based on the first online document, such as agreeing, rejecting, transferring to other person, etc. The first online document provides an operation reference for the second operation. The specific processing method of the content and permission information of the first online document can refer to the specific solutions disclosed in other parts of the present disclosure, which are not repeated here.

In some embodiments of the present disclosure, a data processing method based on online document is proposed, comprising: creating a service data template in response to a first creation event, wherein the service data template has a control for associating an online document; wherein the service data template is used to generate a service processing form or a service processing flow, and the generated service processing form or service processing flow has a control for associating an online document.

In some embodiments of the present disclosure, the service data template can be used to create service data. Since the service data template has a control(s) for adding online documents, the service processing form and service processing flow created based on the service data template can be associated with the first online document added via the control. The method proposed in embodiments of the present disclosure can construct a service processing form or service processing flow associated with the first online document by constructing a service data template, which facilitates the handler of the service processing form or service processing flow to process service data based on the first online document.

In some embodiments, the method further comprises: in response to a second creation event, creating a service processing form based on the service data template and associating the service processing form with the first online document via the control, or, in response to a second creation event, creating a service processing flow based on the service data template and associating the service processing flow with the first online document via the control.

Specifically, the first creation event and the second creation event may include one or more operations, and the service data module may be any of the service data templates mentioned in this disclosure. Since the service data template has controls associated with online documents, the control can be used to associate the created service processing form with the first online document, or to associate the service processing process created based on the service data target with the first online document, thereby utilizing the diffusion ability and easy-to-share characteristics of online documents to facilitate users to process service processing forms or service processing processes.

In some embodiments of the present disclosure, creating a service data template in response to the first creation event comprises: in response to the permission setting event, determining the operation permission of the person associated with the service processing node of the service data template on the online document, wherein the service processing node is associated with the service data template, and the operation permission is applied to all online documents added via the control of the service data template. In some embodiments, the permission setting event can be part of the first creation event, and embodiments of the present disclosure can be applied for the application scenario of the management background. In this application scenario, it is necessary to set the operation permission of the person associated with the service processing node of the service data template on the associated document. The operation permission is not limited to a specific online document, and the operation permission is applied to all online documents added through the control of the service data template, regardless of which online document is specifically added, so that the management of the permission relies on the service data template without being restricted by specific online documents and improves the uniformity and convenience of permission control.

In some embodiments of the present disclosure, creating a service data template in response to a first creation event comprises: in response to an address setting event, determining a first archive address associated with the service data template; wherein the first archive address is the address of a document storage center, and the first archive address is used to associate with a target online document, which is an online document associated with the control. In some embodiments, the first archive address is selected when creating the service data template, so that the online document associated with the control can archive the online document to the first archive address at a predetermined time, so that the archive of the document relies on the service data template, and the online document added by the service data template is stored uniformly.

The present disclosure proposes an apparatus for information processing, comprising: a determination unit configured for determining a first application; a creation unit configured for establishing an association between the first application and a first online document; and a control unit configured for performing a first processing on the first online document according to information related to the first application.

The disclosed embodiment also proposes an apparatus for service processing based on online document comprises: a display unit configured for, in response to a first operation, displaying service data to be processed, wherein the service data to be processed is associated with a first online document; and a processing unit configured for, in response to a second operation, processing the service data to be processed according to the first online document.

The disclosed embodiment also provides an apparatus for data processing based on online document comprising: a creation unit configured for creating a service data template in response to a first creation event; and the service data template used to generate a service processing form or a service processing flow, and the generated service processing form or service processing flow has a control for associating an online document.

Within the enterprise, sometimes it is necessary to approve project content, work content, product qualifications, and rules and regulations. Usually, the processing process is triggered first, and then approval tasks are created. Approval tasks usually need to be approved by multiple responsible persons.

Taking the approval process as an example, this public plan is introduced as an example: sometimes within the enterprise, it is necessary to approve some matters, such as approving documents, systems, qualifications, contracts, etc. During the approval process, it is sometimes necessary to consult relevant documents as a reference.

In some embodiments, the information processing method comprises:
Sil: in response to a first operation event, create service data having an associated first online document.

In some embodiments, the information processing method can be used for a first application such as an approval program and can create service data (service data can be service data of the first application) in the first application after determining the first application. The first operation event, for example, may include one or more operations, such as a service data creation operation, which can be a first operation event performed by the creator of the service data. The service data can be document approval, leave approval, system approval, decision approval, etc. The service data has a first online document (also known as a cloud document), which can be stored in a cloud space, for example, it can be stored in a server. The first online document can be a document created by the creator of the service data. Service data can be displayed in the form of task items, in which a document display area can be inserted, displayed in the document display area, and the association between the first application and the first online document can be established when creating service data or later.

S12: In response to a second operation event, trigger the processing flow of the service data.

In some embodiments, the second operation event may include one or more operation steps, the second operation event may be, for example, an event to submit service data, after triggering the second operation event, the start of the service data processing flow (also referred to as service processing flow), may be executed according to a first service logic starts service processing logic, the first service logic may be a processing flow, after triggering the processing flow of service data, the information related to the service node of the service processing node of the first application, the first online document for the first processing.

In some embodiments of the present disclosure, it is possible to create service data having a first online document. For a person for review, the first online document can be viewed in the service data. For example, the first online document may be associated information of service data documents, so as to facilitate handler to review the associated information when approving.

In some embodiments of the present disclosure, in response to the first operation event, before creating service data, the method further comprises: in response to a process creation operation, setting document permission of the service node of the processing flow and the handler of the service node. In some embodiments, the processing flow of service data may include one or more service nodes, and the service node may have a corresponding handler, and document permission can be set for the service node of service data. The document permission of the handler can be permission to view and permission to edit, and the handler's permission for the online documents in service data can be determined based on document permission to achieve permission management. In some embodiments, the permission to view and permission to edit for the online documents can be set for the service node, thereby specifying which nodes can read or edit the online documents.

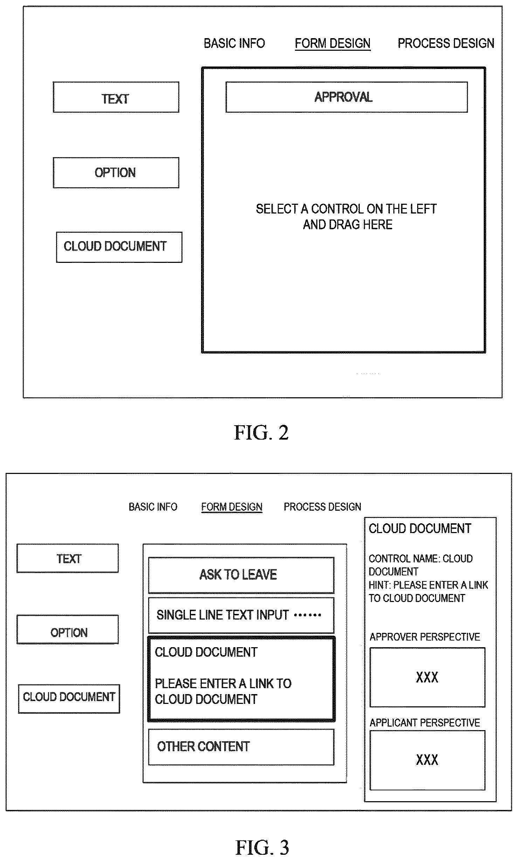

In some embodiments of the present disclosure, in response to a first operation event, before creating service data, the method further comprises: creating a service data template for the service data, service data template has a control(s) for adding online documents in the service data template; the service data is established based on the service data template. In some embodiments, the service data template of the service data can be a form module, which can be pre-designed to process service data templates for creating service data of the first application. FIG. 2 schematically shows the service data template. The service data template can have controls for adding online documents (cloud documents), for example, multiple controls can be provided for selection. Referring to FIG. 3, the text control and cloud document control are added, which can be service data templates created by the administrator of the approval program. After creating the service data template, the creator (applicant) of the service data initiates an application and creates service data based on the service data template and adds the first online document via the control for adding online documents. Of course, in the service data template, other controls can be added by triggering the add control option, and a widget name can be entered after adding other controls. For the control used to add online documents, it has a text box, which is used to display the online document. The text box has a default prompt text (such as "Please enter a link to cloud document" in FIG. 3), and the prompt text can be edited. Different languages can be supported for the prompt text. In some embodiments, the service data can be output, for example, it can be printed or stored as a specific file. After the first approval document is output, the output content can display the controls included in the service data and the content in the controls, that is, the name of the control used to display the online document and the document name of the first online document are output. For example, the name of the control used to add the online document is "cloud document", and the document name of the first online document will be output after the first approval document is output. In some embodiments, after creating a service data template of service data, it is possible to display a preview of the service data template, for example, it is possible to display a preview of the perspective of different users (approver perspective and applicant perspective shown in FIG. 3), to view the implementation effect.

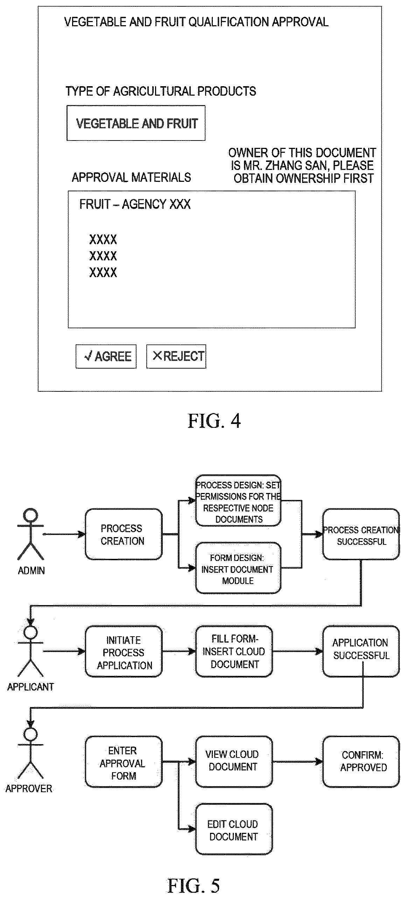

In some embodiments of the present disclosure, creating service data in response to a first operation event comprises: in response to a trigger operation of the service data creation control, displaying a service data creation interface (the service data creation interface may have a service data template), displaying a control for adding an online document in the service data creation interface, and displaying a document adding interface in response to a trigger operation of the control for adding an online document. In some embodiments, the document adding interface may display a recommended online document, a search box may be displayed in the document adding interface, and information such as a document title or document address may be entered in the search box to search for online documents, and the current user's permission for the online document may be displayed in an associated area of the searched online document when searching for an online document, and the searched online document may be selectively added. The first online document can be added to the document addition page, and the first online document can be displayed in the document display area of the service data creation interface. The associated information of the first operation item can be input in the service data creation interface, and the creation of the first operation item can be completed in response to the trigger operation of the determination control of the document creation interface. In some embodiments, only the owner of the first online document can add the first online document to the first operation item, as shown in FIG. 4. If the creator of the first operation item is not the owner of the first online document, a prompt message can be issued when adding the first online document in the first operation item. The prompt message can display the owner of the first online document, such as displaying the communication method or service card of the owner of the first online document, or the control for contacting the owner of the first online document after being triggered can be displayed in the prompt message. This makes it convenient to apply for permission from the owner of the first online document.

In some embodiments, as shown in FIG. 5, the administrator of the first application creates a processing flow, then designs the processing flow, sets the document permission of each node, and designs a form (service data template) to insert a document module (for adding controls for online documents). After the processing flow is successfully created, the applicant initiates a process application, fills in and adds online documents on the basis of the service data template, and approves it by the associated person of the service node (such as handlers). When approving, it is possible to view and edit online documents. After confirming that there are no errors, the approval is passed, and the service node flows to the next node.

In some embodiments of the present disclosure, the method further comprises: when creating a service data template, determining a save address of the online document in the service data template, and saving the online document in the service data created based on the service data template to the save address. Alternatively, when creating service data, it is possible to determine a save address of the first online document and save the first online document to the save address. In some embodiments, a save control can be provided to control whether the online document is saved by the save control. In response to determining that the online document is to be saved, an interface for determining the address to save the online document is provided, and the address selected or entered is used as the address to save the online document. In some embodiments, the save address of the online document, for example, the save address of the first online document, can be a node of the document storage center, with the selected online document storage center (referred to as wiki) node as the save address, and providing an option to choose whether to give the owner of the online document (such as the first document) to the wiki owner.

In some embodiments of the present disclosure, the method further comprises: in response to a trigger operation of the handler of the current service node of the processing flow on the service data of the first application, viewing the service data of the first application; and in response to the handler on the service data of the application, executing the corresponding service data according to the processing operation. The handler of the current service node can view the service data, and when it has the right to read or edit the first online document, it can read or edit the first online document. The handler can process the service data, such as agreeing that the service data of the first application makes the processing flow to the next service node, or opposing the service data, thereby ending the processing flow.

In some embodiments of the present disclosure, the service data of the first application is created in a control (e.g., Applet) of the target communication software. In some embodiments, the first application is associated with the target communication software, and the account in the first application and the target communication software are interrelated. The method in the present disclosure can be executed through the control of the target communication software, such as creating service data and triggering a processing flow of service data.

In some embodiments of the present disclosure, the method further comprises: displaying the service data in a control of the target communication software of the handler of the service node of the processing flow. In some embodiments, the executor of the method can be a first application such as an approval program, and the first application can communicate with each other and associate with the target communication software. The target communication software can be, for example, even if the communication software, the user account of the first application and the target communication software are associated with each other, and the integration between the two software systems is realized by matching the account program. The handler of the node in the target communication software can process and access the service data and the first online document through the target communication software, comment on the first online document with comment permission, read the first online document with permission to view, edit the first online document with permission to edit, and the operations performed by the handler on the target communication software on the service data and the first online document will be synchronized to the first application.

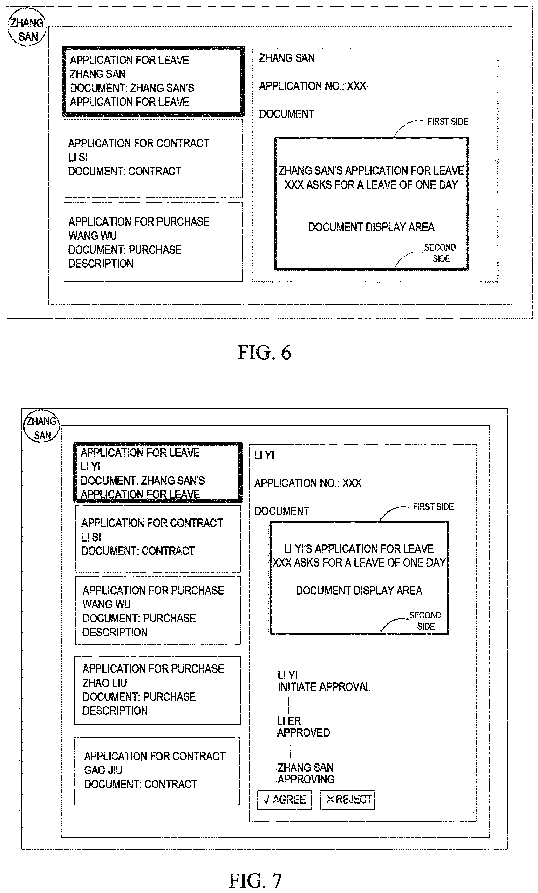

In some embodiments, the person associated with the service node comprises a target person who does not have target permission of the first application. The method comprises: processing the service data in response to the operation of the target person on the first online document displayed by the target communication software. In some embodiments, the target permission can be permission to access the first application, so that users can conveniently process service data without opening access permission of the first application for users. Through the target communication software, external users of the first application can complete the processing of service data or material submission work by means of permission diffusion capabilities such as commenting and editing of the first document. For example, controls for displaying service data can be embedded in the applet of the target communication program, such as approval components, reporting components, task and key node components, or other components of the target communication software. The component can view and process service data and the first online document. This solution can be used for any service scenario that requires information carrying using documents. FIG. 6 schematically shows the display interface of the first application, which displays a service data list, and the selected service data in the service data list will be displayed in detail.

In some embodiments of the present disclosure, the target communication software associated person (creator, handler, etc.) of the first operation item displays the entry identifier of the service data (items in the service data list), and after the entry identifier is triggered, the content of the service data is displayed, and the entry identifier can display the name of the first online document in the service data. As shown in FIG. 7, information related to the service processing flow service node can also be displayed, such as the associated person of the service node and the processing status of the service data.

In some embodiments of the present disclosure, the display interface of the service data has a document display area for displaying the first online document, the document display area, the size and/or position of the document display area can be adjusted. In some embodiments of the present disclosure, the internal connection frame can be used as the document display area to display the first online document by setting an internal connection frame in the control displaying the service data. The internal connection frame can be an iframe frame, for example, when displaying service data in the applet of the target communication software, the internal connection frame can be loaded in the applet to display the first online document in the inline frame. The size of the document display area displaying the first online document can be adjusted, the length and width of the document display area can be adjusted, and the display position of the document display area can be moved freely, thereby improving the user experience.

In some embodiments, the adjustment of the length dimension of the document display area can be realized in the following way. Herein the length dimension can be the display length of the document display area, and the display length can refer to the size in the longitudinal direction of the display interface. In the control for displaying service data, a display container is set, the display container can be a view object, and the display container can have an initial length and a maximum length. The internal connection frame is set in the display container, and the length dimension of the document display area can be changed by dragging the edge of the display container. The display container is used as an operation object for dragging, and the display container can be set in the display area of the first operation item, and the height of the screen z-axis direction (z-axis direction perpendicular to the screen, facing the outside of the screen) in the display area of the first operation item is higher than that of other elements in the display area of the first operation item, so as to prevent the display container from being blocked by other elements, and the length dimension of the display container is not less than the minimum predetermined value,
In some embodiments of the present disclosure, the document display area has an associated operation element, the operation element can be, for example, a display container as described above, which enters a first mode by triggering the operation element. After entering the first mode, the size of the document display area can be adjusted by dragging or in a predetermined way. In some embodiments, after the operation element is triggered, a current first height position (such as the position of a mouse or finger) is recorded. The current first height position can refer to a position in the direction of the length of the document display area. In the first mode, a predetermined operation such as dragging or sliding can be used to obtain a second height position (such as a height position in the direction of the length of the document display area) at the end of the predetermined operation. A height difference value is determined based on the first height position and the second height position. According to the height difference value and the size of the document display area before the predetermined operation is performed, the size of the document display area is adjusted to obtain and display the adjusted document display area. In some embodiments, the size range of the document display area is set in advance, and if the size of the adjusted document display area is greater than the maximum value of the size range, the size of the document display area is set to the maximum value of the size range. If the size of the adjusted document display area is smaller than the minimum value of the size range, the size of the document display area is set to the minimum value of the size range. A specific embodiment is as below: triggering the start event by clicking on the operation element, entering the drag mode at this time and recording the height position (mouse or finger) in the longitudinal direction of the document display area, holding down the mouse or holding the screen (touch screen) in the drag mode, dragging or sliding triggers the movement adjustment event, performing a difference calculation (negative value exists) of computed height position and the height position recorded when entering the drag mode, and then adding the difference value to the size of the existing document display area to obtain a new size. A threshold verification is made for the obtained new size. If it exceeds the threshold value, stop it at the threshold edge (i.e., maximum or minimum value), then set the size of the document display area, and finally release the mouse (or finger), record the size set last time in this drag mode, adjust the size of the document display area according to the size set last time, and then close the drag mode.

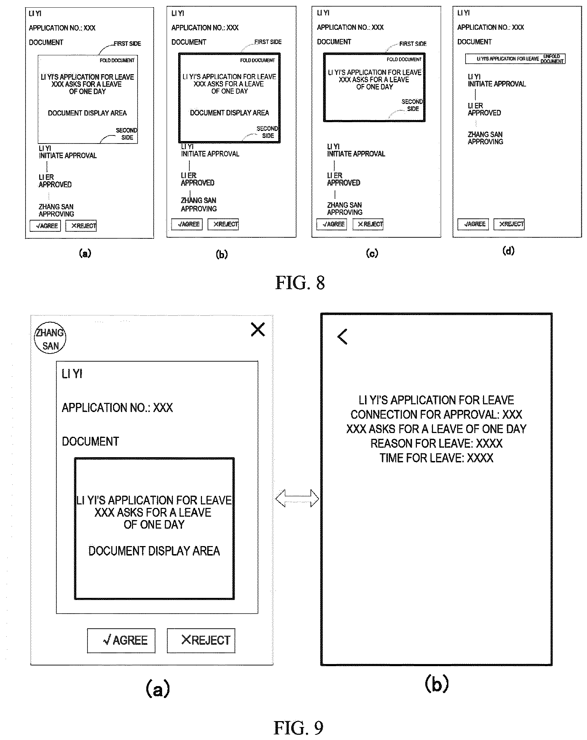

In some embodiments of the present disclosure, please refer to FIG. 8 (a), the document display area has a first side and a second side, which can be the document display area in the longitudinal direction of the display interface displaying service data edge. In response to the selection operation of the document display area, which can be a control identification such as a mouse hovering in the document display area, the display style of the document display area can be changed after selecting the document display area, as shown in FIG. 8 (b). In response to the first predetermined operation performed after the document display area is selected, the first side of the document display area is fixed in the display interface position, and the position of the second side in the display interface is changed. For example, the first predetermined operation may be an upward scrolling operation of the mouse, the first side may be the upper edge of the document display area in the longitudinal direction of the display interface, and the second side is the lower edge of the document display area in the longitudinal direction of the display interface. After selecting the document display area, by rotating the mouse shaft, the upper edge can be fixed while the position of the lower edge can be changed, thereby changing the size of the document display, as shown in FIG. 8(c). For example, the document display area can be quickly folded by rotating the mouse shaft in a first direction and can be quickly folded by rotating the mouse shaft in a second direction. In some embodiments of the present disclosure, when the distance between the first side and the second side of the document display area is greater than the predetermined distance, if the second predetermined operation is performed, the first side is fixed at the position of the display interface, and the distance between the second side and the first side is reduced. For example, the first side is the upper edge of the document display area, and the second side is the lower edge of the document display area. When the distance between the first side and the second side is large, the user's view of the first operation item will be hindered, so the second predetermined operation can be performed (such as scrolling up the mouse shaft) to fix the first side unchanged while changing the position of the second side to reduce the distance between the first and second sides. This can quickly fold the first online document and solve the problem that the user's view of other information is hindered due to the long document display area. That is, when the document display area is greater than or equal to the default height, the head (first side) of the document display area can be fixed when scrolling up to therefore quickly fold the document. In some embodiments, the distance between the first and second sides of the document should not be smaller than a predetermined distance. In some embodiments, as shown in FIG. 8 (c), the document display area displays a folding control. After the folding control is triggered, the document display area is folded, for example, the document display area is hidden. At this time, only the identification of the first online document can be displayed. After the folded document display area, as shown in FIG. 8 (d), the expansion identification can be displayed. After the expansion identification is triggered, the document display area is displayed.

In some embodiments of the present disclosure, after the document display area is selected, when the control identification (e.g., a mouse) moves to the edge of the first side or the second side of the document display area may change the style of the control identification, the control identification after changing the style, the control identification can be used to change the position of the first side or the second side, thereby changing the size of the document display area.

In some embodiments of the present disclosure, in the display interface of service data, the default size of the document display area of the first online document depends on the content amount of the first online document. When the content amount of the first online document is greater than the content amount threshold, the first default size can be used. When the content amount of the first online document is not greater than the content amount threshold, the second default size is used, and the first default size is greater than the second default size. The document display area can be located in an area below the title of service data in the display interface of service data.

In some embodiments of the present disclosure, in order to ensure the smoothness of control and meet performance requirements, the size adjustment frequency of the document display area can be limited, and the size adjustment frequency of the document display area per unit time is not higher than the predetermined frequency, such as controlling the frequency threshold of resetting the size per second, and setting whether to refresh the display interface when the frequency exceeds the frequency threshold. For example, when the size adjustment frequency of the document display area exceeds the frequency threshold, the display interface is not refreshed to reduce performance requirements, so that when adjusting the size of the document display area multiple times, the display interface can be refreshed only when the time after adjusting the document display area reaches the predetermined time length and the size adjustment operation of the document display area is no longer detected, thereby saving computing power.

In some embodiments of the present disclosure, as shown in FIG. 9 (a), while displaying service data, after the area where the first online document in the service data is triggered, as shown in FIG. 9 (b), the first online document can be displayed in full screen. This can meet the browsing needs of mobile devices. When the first online document is displayed in full screen, the first online document can be displayed in full screen, and the service data will continue to be displayed after exiting.

In some embodiments, the creator of the service data is the owner of the first online document, and the creator needs to give the first online document open permission, so that other users can have reading, editing and other permission to solve the processing problems of different users. In some embodiments, the handler of the node of the processing flow can be added as a collaborator of the first online document, and the node can be given the required or predetermined document permission. In other embodiments, the link sharing function of the first online document can be turned on, and the user who obtains the sharing link of the first online document can be set with predetermined permission (such as permission to view or permission to edit), and a password can be set for the sharing link. In this way, by adding the sharing link of the first online document in the service data, other users can obtain predetermined permission when opening the link of the first online document in the service data.

In some embodiments of the present disclosure, the creator of the service data is the owner of the first online document. After triggering the processing flow of the service data, the ownership of the first online document is transferred from the creator of the service data to the first application, and the creator can retain the permission to view of the first online document but does not retain the permission to edit for the first online document. When triggering the processing flow of service data, the processing permission of the non-current service node of the processing flow can be read but cannot be edited. Only the current service node may have permission to edit (whether it has permission to edit depends on whether the permission to edit are opened for the handler of the node in advance); after the processing flow of the service data is completed, the ownership of the first online document is returned to the creator of the service data.

In some embodiments, after the service data is initiated, if the creator of the service data is not the owner of the first online document (i.e., the one with ownership), the first online document may not be added to the service data, and the first online document can only be added to the service data when the owner of the first online document is the creator. After the processing flow is triggered to start, the ownership of the first online document is transferred to the first application, so that the first application can assign the permission of the first online document to the handlers of other nodes. After the processing flow of the service data is completed, the ownership is returned to the creator.

In some embodiments, during the execution of the processing flow of the service data, according to the predetermined setting, the permissions (permission to view or permission to edit, where the permission to edit includes the permission to view) for the handlers of the service node has are opened, and the permission to view and permission to edit can be opened by default to the handlers, or the permission to edit can only be opened to the scheduled handler. In addition, if the permission to view is not opened for the handler of the current node, the handler of the current node cannot read the first online document.

In some embodiments, after the end of the processing flow of service data, the node handler will withdraw the first online document permission to edit, the permission for the first online document if the handler may be set to permission to view.

In some embodiments of the present disclosure, during the execution of the processing flow, the permission to edit the first online document is only opened to the handlers of the current service node of the processing flow who have the permission to edit; in the processing flow after the end of the recovery of the document permissions assigned to the handler of the service node.

In some embodiments, if the creator withdraws the processing flow of service data, ownership of the first online document can be returned to the creator of the service data from the first application, and all service nodes to withdraw the handler of the first online document permission (permission to view and permission to edit), i.e., the permission for the first online document of the handler of the service node will be restored to the state before creating service data.

In some embodiments of the present disclosure, after the handler of the current service node rejects the service data, the handler of the current service node withdraws the permission of the first online document and returns the ownership of the document to the creator of the service data.

In some embodiments of the present disclosure, when the handler of the current service node will transfer the processing task of the service data to another handler, the first online document handler of the current service node is applied to the other handler. For example, if the handler of the current service node has permission to view, the other handler will also be given permission to view, and the handler of the current service node retains the permission of the first online document.

In some embodiments of the present disclosure, the handler of the current service node adds a service node, the handler of the current service node applies the permission of the first online document to the handler of the added service node and retains the current service node. The handler of the first online document has permission, and if the handler of the current service node has permission to view for the first online document, the handler of the added service node will also have permission to view.

In some embodiments of the present disclosure, after the service node in the processing flow is removed, the handler of the removed node will withdraw the permission of the first online document, and the handler of the removed service node can restore the permission of the first online document to the state before the creation of service data.

In some embodiments of the present disclosure, when the handler of the current service node is rolled back to the previous node, the handler of the current service node is applied to the handler of the first online document. For example, the handler of the current service node has permission to view, then the handler of the previous node will also have permission to view. In some embodiments, if the service node is rolled back to the creator of the service data, it is necessary to open the permission to edit for the first online document to the creator.

In some embodiments, after the service data is copied or shares, the user who is copied or shared has the permission to read but not edit for the first online document in the service data.

In some embodiments of the present disclosure, during the execution of the processing flow of service data, the first handler is a handler of at least two service nodes. After the first handler processes the service data in one of its responsible service nodes, and there are still unprocessed service nodes for which the first handler is responsible, if the content of the first online document changes, the first handler processes the service data again in the unprocessed service node. For example, there are three service nodes, and handler A is responsible for the first and third nodes. The current processing flow proceeds to the second service node. At this time, if the content of the first online document changes, handler A still needs to process the service data in the third service node and will not stop processing the service data in the third service node because handler A has already processed the service data in the first service node.

In some embodiments of the present disclosure, the service data is combined with the first online document to improve communication efficiency and supports the height adjustment of the document display area of the first online document and free drag and drop and can display the first online document in full screen and hide the full screen display.

For the approval scenarios of enterprises for complex decision-making information, such as document approval such as official documents and systems, as well as attachment approval such as supplier/product qualifications and contracts, some solutions disclosed herein integrate approval with online documents to open up the account, permission, information notification and other fields of underlying approval applications and online documents. The front-end embeds online document components through iframes and other methods and supports approvers to freely drag the displayed window size, ultimately achieving the best experience of approving with online documents.

Regarding the accounts, permission, information notifications, and other fields of applications such as bottom-level approval and online documents, the permission and information notifications of online documents (also known as online documents or collaborative documents) can be processed according to the service processing logic of the application. For example, predetermined online document permission can be opened for predetermined service node handlers or person roles, or notification messages can be sent to relevant handlers of predetermined nodes of the application when the content of online documents changes, such as when the comment content changes, so that relevant person can timely or change the content of online documents. Since the notification is related to the service node person of the application, the integration of the two can be strengthened to ensure that the message can reach the service handler of the service program in a timely manner.

In some embodiments of the present disclosure, an online document component can be added to the approval flow (also referred to as the approval process): through approval admin, an online document component can be added, and the name, display condition, printing status, archive location, etc. of the online document can be set.

In some embodiments, the integration of applet and online documents can be achieved: by solving the account, permission, message communication problems between the applet and web applications (such as online documents), the integration and interoperability of the two can be achieved.

In some embodiments, regarding the display of online documents, the online document can be embedded in the approval page by iframe, supporting the approver to freely drag the document window size, and supporting one-click folding, one-click full screen and other operations.

In some embodiments, the current tenant approval and other applications can be achieved in collaboration with an external tenant, wherein the tenant can be understood as a group identifier or organization identifier, generally different enterprises can be understood as different tenants. Open external permission to edit through online documents, the problem of cross-tenant content approval can be approved.

In some embodiments, regarding the operation permission of the approver on the online document, the approval admin can support setting the permission of each approver or approval role on the online document, such as permission to edit, read, share, etc.

In some embodiments, regarding the transfer of the online document ownership, the application is associated with the online document, and after the application proceeds to a predetermined service node or reaches a predetermined service processing state, the owner of the online document can be changed to the application or a service handler related to the online document in the application, thereby facilitating subsequent permission changes. For example, in the approval scenario, after submitting approval, the document owner is transferred from initiator to the application by calling up the document owner transfer interface, which facilitates subsequent application to change document permission.

In some embodiments, regarding the online document permission processing, in the approval scenario, the document "Update Collaborator Permission" interface is retrieved to change the online document permission along with the approval processing such as approving/rejecting, forwarding, adding/removing approvals, returning, copying, and sharing.

In some embodiments, based on the change of document content, the handler that appear repeatedly in the application can be deduplicated to avoid the same person from doing duplicate processing of the same document content. For example, in the approval scenario, when the same approver appears repeatedly in the approval process, if the document content changes, it needs to be re-approved; otherwise, it is automatically skipped, that is, if the document content has not changed, the approver of the current approval node can automatically skip if the document content has been approved before in the approval process.

In some embodiments, regarding the writing of document content, the service data or the processing node link related to the service data can be embedded in the document through the association between the service data of the application and the document, or a new document can be generated based on the above service data or the processing node link. For example, in the approval scenario, the approval link can be written into the document through the association between the approval documentation and the document, and it supports returning to the approval process with one click in the document to view the approval details.

In some embodiments, a category "cloud work" and a control for "online document" can be added in the approval admin. The widget name, prompt text, and permission settings entrance can be set.

In some embodiments, automatic archiving can be supported, and whether to archive the online document after approval can be selected. If archived, open the wiki and select the specific wiki node to be archived; it is possible to also choose whether to transfer the owner of the online document to the wiki owner.

By matching the account of the application associated with the online document (for example, the approval process and the online document share the same ID, or the IDs of the two are related) as an ID, communication is carried out, and the ability of permission such as comment notification, document reading and editing is opened up, and the integration of the two applications is realized. The original submitter does not have permission for access the other party's approval process and cannot submit materials. With the permission diffusion ability of the document, external users can complete the work of material submission.

Application scenarios: Online document components can be embedded in any applet, including Applet approval, reporting, OKR (Objectives and Key Results Management), and any applet.

This technical solution can be used for any service scenario that requires information bearing with documents.

Web online documents and Applet approval applications can be integrated and displayed through iframes.

By highly adapting the front-end to the online document component and supporting free dragging of the document window, the best browsing and approval experience is achieved.

Implementation of freely dragging the height of the document window:
Layout: In the applet, View is used as a container with an initial height and a maximum height. The iframe component of the document is placed inside the View container, and a View is added as a drag-and-drop operation element. The operation element is located at the bottom of the container element, with a higher level than any other element in the container and a slight height guarantee that it can be clicked.
Interaction: Trigger the touchstart event by clicking on the operation element. At this time, enter the drag mode and record the height position (mouse or finger) at this time. In the drag mode, hold down the mouse or hold down the screen (touch screen) to drag or slide to trigger the touchmove event. The difference between the obtained position height and the recorded height when entering the drag mode is determined based on the mouse (or finger) position obtained in each touchmove event (there is a negative value), and then the determined height difference value is added to the new height value based on the existing container height. Safety threshold is checked for the obtained new height. If it exceeds the threshold, it is stopped at the threshold edge (i.e., maximum or minimum value), and then the new height of the container is set. Finally, when the mouse (or finger) is released, the last height in this drag mode in the touch end (touchend) event, and the drag mode is closed after recording the container height.
Cut-off: In order to freely control the balance between fluency and performance, the cut-off control can be performed on the height setting frequency. Reset the height frequency every second and whether to refresh the interface when exceeding the threshold. The actual implementation frequency can achieve stepless control between the touchmove event trigger frequency and 0 times/second, but the actual product will be limited to a fixed value. The specific value should be considered comprehensively according to the actual product requirements, fluency experience, and software performance.

It supports mobile adaptation. Click on the online document component to browse in full screen.

Regarding the processing of online document permission, in some embodiments, in the approval scenario, external permission to edit can be opened for online documents by approving initiators (such as document owners), so that external tenant content supply persons have document permission to edit, in order to solve the cross-tenant content approval scenario.

Method 1: Add external collaborators as document collaborators and grant permission to edit.

Method 2: Enable link sharing, set it to "editable by people who get links on the Internet", and add a password.

In the approval process, each approver can configure document permission such as "readable" and "edit". Regarding the change of document permission, the exemplary explanation is as follows:
About permission revocation: After the initiator submits the approval, the document owner is transferred to the approval application. The approval application withdraws the permission to edit of the document collaborator, does not withdraw the readable permission, and others can only read it.

About permission release: Return to the initiator, the document owner is still the approver, but the permission to edit is released to the original editor or owner between submission for approval.

About permission granting: During the approval process, according to the background settings, the reading and permission to edit of the corresponding approval process approver are enabled (the background sets the reading/permission to edit of specific approvers), and the "readable" and "edit" are enabled by default. The permission to edit is only assigned to the approver.

If the "Read" permission is not enabled, the current node person is not visible to the "Online Document Control".

About permission withdrawal: After the approval is completed, the "edit" permission of the approver at this node will be withdrawn, which can only be read.

Regarding permission handling for initiator operations, when withdrawing an approval request, the document owner is returned from the app to the initiator. And the document collaboration permission of all approvers are withdrawn.

### About approver's permission processing:

In case of approval rejection: The current approver withdraws document permission, including edit/permission to views, which is deemed to have removed collaborators. At the same time, the document owner is returned from the application to the initiator.

When transferring approval items to others for approval: Apply the current approver's document permission to the referred person. If the current approver has permission to view for the document, the referred person will grant permission to view for the document. At the same time, the approver's original permission are retained.

In the case of adding approvers, that is, when other approvers are added: the document permission of the current approver are applied to the approver. If the current approver has permission to view for the document, the approver will grant permission to view for the document. At the same time, the approver's original permission is retained. In the case of reducing approvers: withdraw the document permission of the approver who has been reduced.

In the case of rollback, that is, when the approval node is returned to the previous approval node: The document permission set for the current approval node are opened for the rollback person. If it is rolled back to initiator, the initiator needs to be assigned permission to edit.

In the case of copy and sharing, when the approval item is copied to others or share it with others, it is possible to only enable predetermined permission for the copy or shared person, such as read document permission.

Automatic deduplicate of approver can also be realized: For scenarios where the same approver needs to approve at different nodes, if the document content changes after the approver's approval, the next approval node needs to be re-approved. For example, it is possible to determine whether the document version has undergone a predetermined change by calling the document version change interface or obtaining document version information, so that when the predetermined change occurs, the corresponding approver can be approved. Alternatively, when there is no predetermined change, skip the approver at a certain section when the approver has seen the corresponding information of the current version to avoid repeated approval. After the document content is changed, the approver will process it based on the changed document.

When the approval flow status is switched, the permission to edit of cloud documents is automatically adjusted. If the permission to edit is turned off during the approval, the permission will be reopened if the approval is not passed, and the permission will be turned off for automatic archiving after the approval is passed. For online document approval, the online document comment function is enabled by default during the approval process to achieve better approval collaboration efficiency. In addition, the approval abstract information can also include document change record information. View changes in the version record of the online document in the approval documentation details. For the approver, the approval is the latest document content.

The examples of approval have been described above where the document permissions changes with changes of the service logic and service process. It can be seen that when an application is associated with an online document, the permission of the online document can be processed based on the service processing logic and process of the application. For example, when the predetermined service node is reached, the document permission of the relevant person of the node are changed. Another example is to withdraw the document permission of the predetermined person after the predetermined service node is processed.

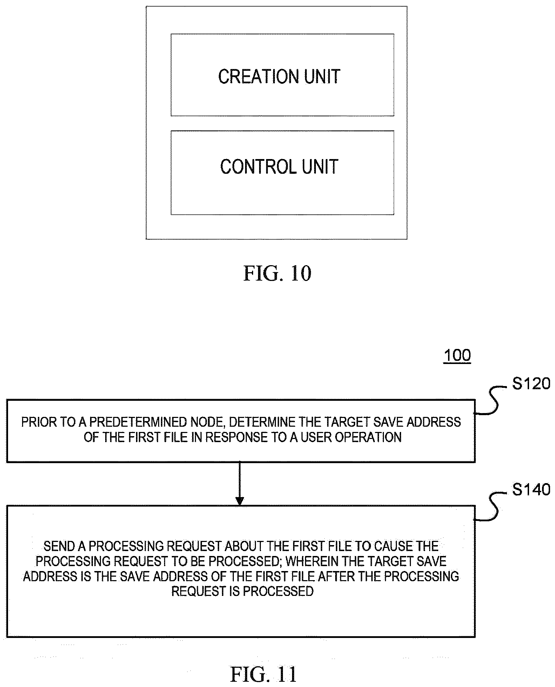

As shown in FIG. 10, the present embodiment also provides an apparatus for information processing, comprising: a creation unit for configured for creating a first processing item having a first online document in response to a first operation event; and a control unit configured for triggering a processing flow of the first processing item in response to the second operation event.

According to one or more embodiments of the present disclosure, there is provided an apparatus for information processing, further comprising a setting unit configured for, in response to the flow creation operation, setting the document processing node of the service processing flow and the handler of the service processing node permission.

According to one or more embodiments of the present disclosure, there is provided an apparatus for information processing, prior to creating a first processing item in response to a first operation event, further comprising: a template creation unit configured for creating an item template for processing an item having a control for adding an online document in the item template; the first processing item is established based on the item template.

According to one or more embodiments of the present disclosure, there is provided an apparatus for information processing, the control unit is further configured to display the first processing item in the control target communication software handler of the node of the processing flow.

According to one or more embodiments of the present disclosure, there is provided an apparatus for information processing having a document display area for displaying the first online document in the display interface of the first processing item, the document display area, the size and/or position of the document display area are adjustable.

According to one or more embodiments of the present disclosure, there is provided an apparatus for information processing, the creator of the first processing item is the owner of the first online document, and after triggering the processing flow of the first processing item, ownership of the first online document is transferred from the creator of the first processing item to the first application; after the processing flow of the first processing item is completed, ownership of the first online document is returned to the creator of the first processing item.

According to one or more embodiments of the present disclosure, there is provided an apparatus for information processing, during the execution of the processing flow, the permission to edit for the first online document is only opened to the handler of the current service processing node of the processing flow who has the permission to edit; after the end of the processing flow, the document permission assigned to the handler of the service processing node is withdrawn.

According to one or more embodiments of the present disclosure, there is provided an information processing method comprising:
Before the predetermined processing node corresponding to the processing request for the first file, the target save address of the first file is determined in response to a user operation, so that the first file is saved to the target save address after the processing request is completed.

FIG. 11 shows a flowchart of an information processing method 100 according to embodiments of the present disclosure, the method 100 includes:
Step S120: prior to a predetermined node, determine the target save address of the first file in response to a user operation.
Step S140: send a processing request about the first file to cause the processing request to be processed; wherein the target save address is the save address of the first file after the processing request is processed.

In some embodiments, in response to a user operation of the predetermined identifier, the pre-stored one or more levels of file save directory can be displayed, and the user can select a specific target directory location in the file save directory, so that the user can select the directory location to determine the target save address of the first file.

By way of example, the processing request may be a request for one or more of its users to approve the first file.

In some embodiments, the first file includes but is not limited to a document, an image, a multimedia electronic file, a program file and the like.

In some embodiments, the processing request may include the first file or the link information corresponding to the first file, so as to facilitate the processing request of the handler to obtain the first file, thereby speeding up the processing process.

It should be noted that before the predetermined node, the processing of the request can be completed, for example, when the request is created, before the request is sent, or during the processing of the request.

Preferably, step S120 is executed before the processing request is sent, such as when the processing request is created, so that no additional operation steps are required to set the target storage location of the first file, thereby improving the efficiency of saving files and saving manpower.

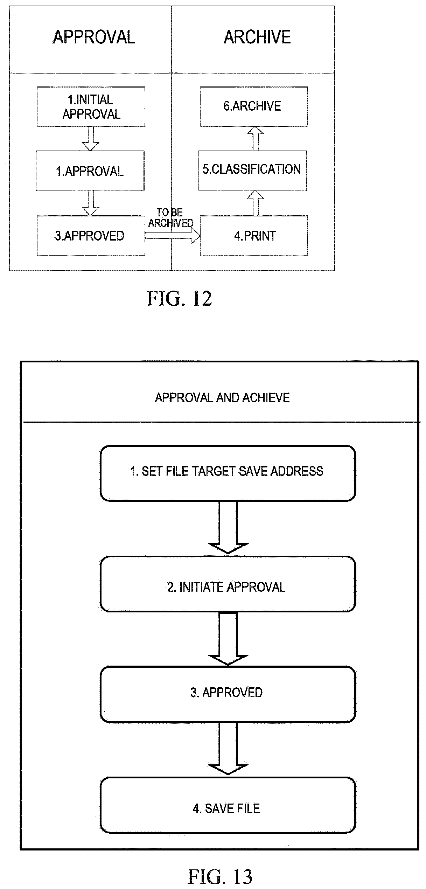

The following is an example of document approval. Referring to FIG. 12, the relevant document approval and archive process (manual archive) includes initiating a document approval request, one or more person reviewing and approving the document, printing, classifying, and archiving the document. Similarly, the electronic archive process also requires special operation steps to electronically archive the document after the approval process is completed, and the archive efficiency is low, requiring additional manpower. Referring to FIG. 13, according to one or more embodiments of the present disclosure, before initiating approval, relevant person can set that the document to be approved should be saved in a directory in a certain cloud storage space after approval. In this way, when the document to be approved is completed, the system can automatically save the file according to the pre-defined archiving strategy without special archiving operations, realizing the synchronization of archiving and approving the document, thereby improving the efficiency of approval and archiving and saving manpower.

According to one or more embodiments of the present disclosure, by determining the target address of the first file is saved based on the user's operation before the predetermined node, the processing request can be made on the first file is processed, and the first file is automatically saved to the target save address, without waiting until the processing of the processing request is completed to save the file by a special file save operation. Synchronization of file storage and processing request processing is achieved, thereby improving the efficiency of file processing.

In some embodiments, before step S120, in response to the user's operation, it is determined whether to perform a predetermined save the first file after the processing request is processed. By way of example, the user can set whether to archive the file after approval before initiating file approval. If so, the archive address of the first file can be further set, that is, the target save address.

In some embodiments, the processing request includes information indicating the target save address. In the present embodiment, the processing request on the first file further includes information indicating the target save address, the first file can be stored to the corresponding target save address according to the instruction information after the processing request is processed.

In some embodiments, if the first file is a document, the method 100 further comprises:
Step S150: After the processing request is processed, display the processing information corresponding to the processing request at a predetermined position in the document.

In some embodiments, the processing information includes, but is not limited to, processing node information, handler information, processing opinion information, processing time information.

The following is an example of document approval. According to one or more embodiments of the present disclosure, after the approval is completed, approval information about the document can be displayed at a predetermined position in the approved document, such as below the title, including but not limited to approval node information, approver information, approval comment information, approval time information, etc., such as "approval node: department approval", "approver: department manager, Zhang", "comment approval: agree", "approval time: January 1, 2021", so that subsequent users of the document can easily access the approval information related to the document by opening the document. By way of example, after the approval is completed, the approval information of the document can be automatically generated in the document through a predetermined API (Application Programming Interface).

In this way, by displaying processing information corresponding to the processing request at a predetermined position within the document after the processing request is processed, it is possible to facilitate subsequent possible review and review of the document or corresponding processing flow, such as enterprise financial review, audit, etc.

In some embodiments, the process information includes link information configured to display the process details information in response to a user's operation. In this way, by displaying the link information only within the document, the content of the document itself is not unduly affected, and it is also convenient for the user to click to view the process details information corresponding to the document, by way of example, the process details information includes, but is not limited to, processing node information, process personal information, process opinion information, and process time information.

In some embodiments, the method 100 further comprises: step S101: store a file save directory in advance; and step S120 comprises: in response to a user operation of the file save directory, determining the target save address of the first file.

By way of example, a file storage directory at a cloud server can be created in advance and stored in the client for the user to select a target save address for the first file in the cloud server device from the file storage directory. The file storage directory stored in the client can also be updated in real time or periodically through a predetermined interface, thereby realizing synchronization between the file storage directory of the client and the cloud server.

The following will be described using cloud file approval as an example. According to one or more embodiments of the present disclosure, by using cloud files as carriers for approval items containing files, when users create approvals, they specify specific cloud space archive directories for subsequent cloud files, and set corresponding directory nodes for approval form options, so that after the approval is completed, the cloud files included in the approval items are automatically archived to the corresponding cloud space directory nodes by calling the cloud space archive interface, so as to achieve efficient and fast approval file archiving capabilities.

The conventional approach is to decide whether to archive the approval documents and execute the archiving steps only after the approval is completed. This disclosure allows the approver to set whether the approval documents need to be archived and in which directory before the predetermined node in the approval process, such as before the approval is initiated or completed. Because the archive is stored in cloud space, the archived content is not limited to text files, but also supports different forms of electronic information records such as text, charts, audio, and video.

In some embodiments, it is possible to check whether the approval procedure corresponding to the approval file must belong to the file to be archived. If so, for example, if the archive information is not selected, or the approval is not passed, the next step is not allowed, for example, the approval file archive.

In some embodiments, automatic archiving is achieved by establishing an association between the cloud file storage center and the approval program, such as opening a directory interface of the cloud file storage center, calling the directory interface through the approval program, and storing the approval file corresponding to the approval program in a specified directory. Here the directory structure of the cloud file storage center can be set in advance.

In some embodiments, the directory structure information can be called in the approval process based on the predetermined directory structure, for the user to select the specified online document stored in which directory.

Further details are provided below, such as the following example:

### About the archive directory interface:

In one way, one of the steps to achieve automatic archiving is to set the archive directory interface of the approval file in advance. Through this archive interface, automatic archiving can be carried out according to the archive directory designated by relevant person after the approval is completed. The setting of the archive directory interface first forms a standardized archive information directory, and then exchanges system information between archive directories through relevant interface technologies.

Of course, in other embodiments, it is also possible to create or modify the directory information in the approval process, synchronize the newly created or modified directory information to the cloud file storage center to update the directory structure of the cloud file storage center, so as to facilitate users to update the cloud file directory flexibly in the approval process. In order to avoid users updating the cloud file directory at any time, resulting in non-standard file archiving, predetermined verification rules can also be set, or a predetermined approval entry for directory updates. Only if the new or modified archive directory meets the predetermined verification rules, such new creation and modification are allowed. Alternatively, only by modifying or creating a directory through the approval entry can the archive directory be successfully modified or updated in the cloud file storage center.

### About the archive directory:

The archive directory is a directory used to store files, which can be a folder used to store files. The archive directory can include first-level, second-level, third-level directories configured according to enterprise service. The archive interface can save or mount the approval file at a specified location in the archive directory based on the file identifier corresponding to the approval file, such as a token, and the directory information corresponding to the target save address, such as the directory ID.

In some embodiments, the directory information corresponding to the target save address may be included in the approval file or the approval request, the directory information may include the archive directory ID and archive description information that the approval file needs to be archived. Archiving can be achieved by identifying the directory and archive description information in the directory information. By way of example, the archive description information may include directory information of the archive directory.

Typically, the final determined archive directory needs to be confirmed by the user, in order to ensure the accuracy of the archive, of course, in some embodiments, the confirmation may not be necessary.

The archive directory data structure can be a hierarchical structure such as a tree.

In one embodiment, the first online document can be generated according to the service data associated with the service node, or the content data carried in the first online document can be processed. In the approval scenario, approval information (also referred to as approval-related information) can be generated based on one or more of the approval nodes, approvers, and approval progress-related information in the approval program, and the approval information can be carried in the online document and subsequently archived in the cloud file storage center. The new online document can be generated, and the approval information can be written in the newly generated online document, or in the predetermined area of the existing online document. The written approval information can be displayed in a predetermined format. In one way, the approval information can be displayed in a predetermined format below the title of the online document. For example, the approval-related information can be displayed in the form of an API link. Through the API link, it is possible to jump to the corresponding approval program or open the approval information details. In one embodiment, the approval document information may be information automatically generated after approval, or information that is updated with the process of approval. It can be written under the online document title in the form of a link through the API and saved together in the archive directory. Approval-related information may include: the name of each approval process, the operator, the content of the opinion, the approval time and other information. Among them, through the API interface, page information recognition, predetermined field value extraction, etc., to obtain approval-related information from the approval process.

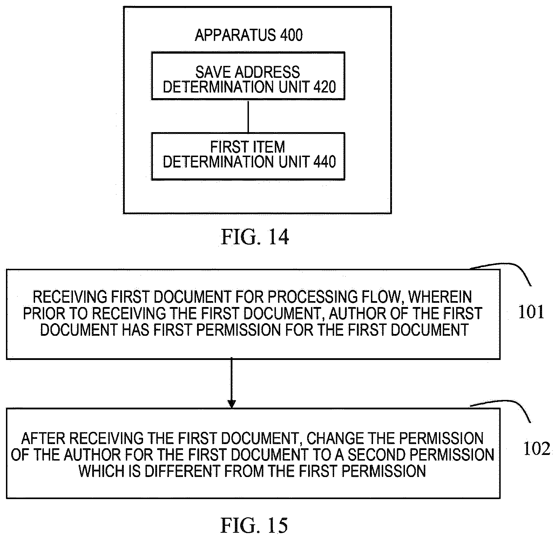

Accordingly, as shown in FIG. 14, there is provided an apparatus for information processing 400 according to an embodiment of the present disclosure, comprising: a save address determination unit 420 configured to determine the target save address of the first file in response to user operations before the predetermined node; and a request sending unit 440 configured to send the processing request about the first file so that the processing request is processed; wherein the target save address is the save address of the first file after the processing request is processed.

In some document processing scenarios (such as enterprise approval scenarios), approval types such as official documents, systems, qualification review, contracts, etc. often rely on different information or file contents as decision-making basis. The approval process involves communication and collaboration among multiple parties, but the approval process itself needs to be rigorous. Therefore, the information or documents under approval should not be modified at will during the approval process, otherwise online cloud documents cannot be used to carry information or files during the approval process. However, when the approval is not passed, the initiator of the process needs to modify the information or files. After the approval is passed, the information or files are based on the enterprise archiving needs and should not be modified again at this time.

Fig. 15 provides a flow chart of an information processing method of an embodiment of the present disclosure. The information processing method of the present disclosure may include a step 101 of receiving a first document for processing flow. In some embodiments, the first document is a cloud document or an online document. In some embodiments, the first document is referred to as a first online document. In some embodiments, the processing flow is an approval flow, such as approving bills, contracts, Purchase Requisitions, etc.

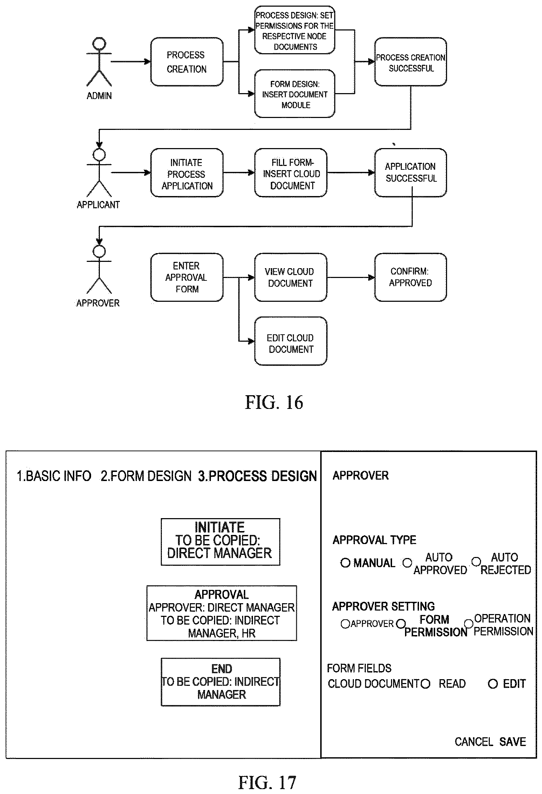

FIG. 16 shows a schematic diagram of the processing flow using the approval process as an example. In some embodiments, as shown, the administrator first creates the corresponding approval process, designs the process, and sets the document permission of each node in the approval process. In addition, form design is performed to provide an insert document module. After the process is successfully created, the initiator or applicant of the approval process can initiate an approval process application, fill out the form, and insert the cloud document. After the applicant's application is successful, the approver of each node in the approval process enters the approval form for approval. During the approval process, the approver can usually view and edit the cloud document. After the approver of all nodes confirms that there are no errors, the approval is passed, and the approval process ends.

In some embodiments, the author or original editor of the first document has first access to the first document prior to receiving the first document, i.e., prior to successful application by the applicant or initiator of the processing flow.

In some embodiments, the method disclosed herein may further comprise the step 102, after receiving the first document, the author's access to the first document is changed to a second permission, the second permission is different from the first permission. That is, after entering the processing flow, the system can automatically control the permission of the first document to ensure efficient collaboration through the first document, on the other hand to ensure rigor in the processing flow, to avoid the first document being improperly modified in the processing flow.

In some embodiments, the first permission is the permission to read and the permission to edit, and the second permission is the permission to read. The permission to read can only read the first document, and the permission to edit can edit the first document.

In some embodiments, the administrator will need to process cloud documents to join the processing node, so that it can obtain the assigned role of the cloud document. In some embodiments, the administrator can specify that the handler has permission to read and permission to edit for the document when assigning the role. As shown in FIG. 17, when the administrator is designing the process, he can set the handler and the persons to be copied at each stage, the processing type, and the corresponding permission of the handler.

In some embodiments, after receiving the first document, the handler in the node of the processing flow has predetermined permission on the first document. In the processing flow creation process, the permission of the handler of each node in the processing flow can be set, and once the first document enters the processing flow, the handler of the corresponding node has the corresponding predetermined permission on the first document. Thus, efficient and unified management of the permission of the first document in the processing flow is facilitated.

In some embodiments, when the first document fails to pass the processing flow or is returned to the initiator of the processing flow, the author's permission for the first document is changed from the second permission to the first permission, that is, the permission to read and the permission to edit. In some embodiments, the first document is not passed through the processing flow or is returned to the initiator of the processing flow due to the form or substance of the first document being unqualified. When this happens, the author may want to modify the first document to meet the corresponding requirements. In this way, by changing the author's permission for the first document from the second permission for the first permission, the processing flow can be sequentially carried out. After the author completes the modification of the first document, the first document that meets the requirements can be submitted for the next processing flow.

In some embodiments, when a first handler in a node of the processing flow transfers a processing task to another person, the another person has the same permission on the first document as the first handler had on the first document before the transfer. For example, the first handler is the transferor and the another person is the transferred person. If the first handler has permission to edit on the first document, the another person also has permission to edit on the first document; if the first handler only has reading permission, the another person also has reading permission. In this way, the permission of task processing in the processing flow are handed over or connected in an orderly manner, thereby ensuring rigor in the processing flow.

In some embodiments, when a first handler in a node of the processing flow adds a task node to another person, the another person and the first handler have the same permission to the first document. That is, the person to be added to the task node has the same permission to the first document as the person to add it. For example, if the first handler has permission to edit to the first document, the another person also has permission to edit to the first document; if the first handler only has permission to read, the another person also has permission to read. In this way, the permission of task processing in the processing flow are handed over or connected in an orderly manner, thereby ensuring rigor in the processing flow.

In some embodiments, when the task node corresponding to the first handler in the processing flow is deleted, the first handler's permission for the first document is withdrawn. When the task node corresponding to the first handler is deleted, the first handler no longer needs to process the first document, and the first handler's permission for the first document is withdrawn, which can avoid unnecessary modifications that the first handler may make to the first document later, thereby ensuring rigor in the processing flow.

In some embodiments, when the processing flow proceeds from the current node to the next node, the first handler of the current node changes the permission of the first document from the first permission for the second permission, and the second handler of the next node changes the permission of the first document from the second permission for the first permission. Since the first handler of the current node has finished processing, changing his permission for the first document from the first permission for the second permission, for example, withdrawing the permission to edit, can avoid inappropriate modifications of the first handler in the subsequent processing flow, and can ensure the rigor in the processing flow. In addition, since the processing flow enters the next node, the permission of the second handler of the next node to the first document is changed from the second permission for the first permission, for example, the permission to edit is added, which can also ensure the smooth processing of the second handler.

In some embodiments, when the processing flow returns from the current node to the previous node, the first handler of the previous node changes the permission of the first document from the second permission for the first permission, and the second handler of the current node changes the permission of the first document from the first permission for the second permission. Since the second handler of the current node has finished processing and returned to the previous node, changing its permission for the first document from the first permission for the second permission, for example, withdrawing the permission to edit, can avoid inappropriate modifications by the second handler in the subsequent processing flow, and can ensure the rigor in the processing flow. In addition, because the processing flow enters and returns to the previous node, the permission of the first handler of the previous node to the first document is changed from the second permission for the first permission, for example, the permission to edit is added, and the smooth processing of the first handler can also be ensured, for example, after editing the first document and then entering the next processing flow in order.

In some embodiments, the persons to be copied and shared only have permission to read and no permission to edit. In some embodiments, the newly assigned user will perform actions on the reassigned document to be processed.

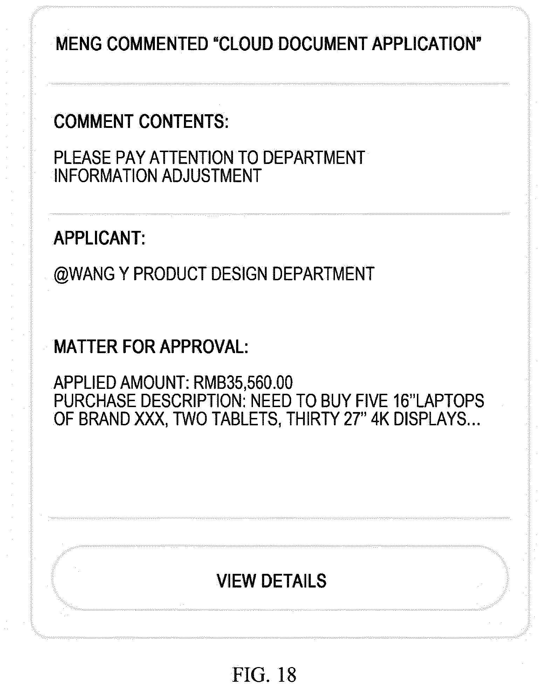

In some embodiments, the information processing method of the present disclosure further comprises receiving comment content in the comment area of the first document and sending a notification message to the initiator and the handler of the processing flow when the comment content is not associated with any person in the comment content. In some embodiments, the comment function is turned on by default in the processing flow, which can help the handler quickly notify the initiator of the processing opinion through the comment function, so that the corresponding person can timely adjust the content to be processed according to the processing opinion (for example, the first document). For example, as shown in FIG. 18, Meng's comment content is "Please pay attention to department information adjustment", and there is no @anyone, that is, the comment content is not associated with any specific person. At this time, the notification message shown in FIG. 18 is sent to the initiator and the handler of the processing flow to facilitate them to view and process the comment content in a timely manner. This helps improve the efficiency of processing and collaboration.

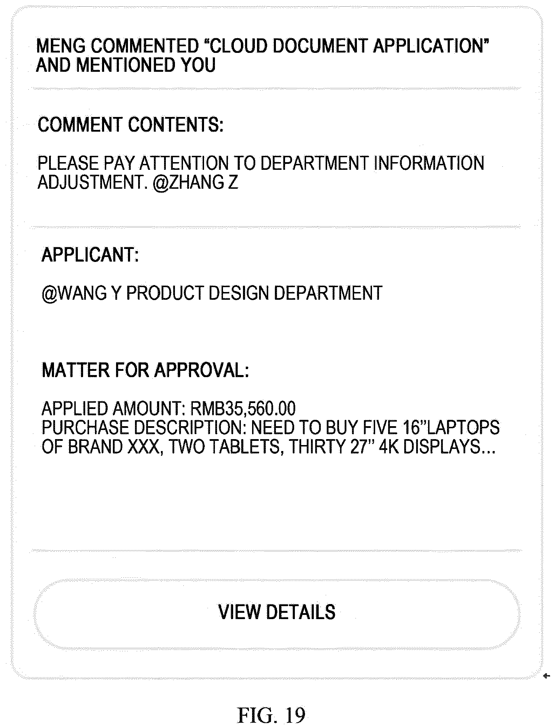

In some embodiments, the information processing method of the present disclosure further comprises: receiving comment content in the comment area of the first document, and when the comment content is associated with the handler of the processing flow, sending a notification message to the initiator of the processing flow and the handler associated with the comment content. For example, as shown in FIG. 19, Meng's comment content is "Please pay attention to departmental information adjustment.", and he @Zhang, that is, the comment content is associated with Zhang. When Zhang is the handler of the processing flow (e.g., an approver at a certain node), he sends a notification message as shown in FIG. 19 to the initiator and Zhang of the processing flow, so that the initiator and Zhang of the processing flow can view and process the comment content in time. In addition, in FIGS. 18 and 19, after a corresponding person clicks "View Details", he can directly jump to the corresponding document to be processed for processing.

In some embodiments, the information processing method of the present disclosure further comprises: receiving comment content in the comment area of the first document, associating the comment content with a specific person in the comment content, and sending a reminder message when a specific person has no permission for the first document, reminding whether to open the readable permission of the first document to a specific person. In some embodiments, for example, as shown in FIG. 19, Meng @Zhang in his comment, and Zhang does not have permission for the first document. A reminder message is sent at this time to remind whether to open the readable permission of the first document to Zhang. Thus, it avoids sending a notification message to the corresponding person that the person cannot view the corresponding content.

In some embodiments, a notification message is sent to a particular person when it is determined to open the permission to read of the first document. Similarly, when the permission to read has been opened to Zhang of FIG. 19, a corresponding notification message can be sent to Zhang at this time to facilitate the particular person (e.g., Zhang) to view the comment content in a timely manner.

The disclosed embodiment also provides an apparatus for information processing 600, which includes a document receiving module 201 and a permission changing module 202. In some embodiments, the document receiving module 201 is configured to receive a first document for processing flow, wherein the author of the first document has a first permission for the first document before receiving the first document. In some embodiments, the permission changing module 202 is configured to change the author's permission for the first document to a second permission after receiving the first document, which is different from the first permission.

It should be understood that the content described about the information processing method also applies to the information processing device 600 used here. For simplicity, it will not be described in detail here.

In some embodiments, the first permission is the permission to read and the permission to edit, and the second permission is the permission to read. In some embodiments, after receiving the first document, the handler in the node of the processing flow has predetermined permission on the first document. In some embodiments, the author's permission on the first document is changed from the second permission for the first permission when the first handler in the node of the processing flow transfers the processing task to another person, the another person has the same permission on the first document as the first handler had before the transfer. In some embodiments, when the first handler in the node of the processing flow adds a task node to another person, the another person and the first handler have the same permission on the first document. In some embodiments, when the task node corresponding to the first handler in the node of the processing flow is deleted, the first handler's permission on the first document is withdrawn. In some embodiments, when the processing flow proceeds from the current node to the next node, the first handler of the current node changes the permission of the first document from the first permission to the second permission, and the second handler of the next node changes the permission of the first document from the second permission to the first permission. In some embodiments, when the processing flow returns from the current node to the previous node, the permission of the first handler of the previous node to the first document changes from the second permission to the first permission, and the permission of the second handler of the current node to the first document changes from the first permission to the second permission. In some embodiments, the apparatus for information processing further includes a notification module configured to send a notification message to the initiator and the handler of the processing flow when the comment content is received in the comment area of the first document, and the comment content is not associated with any person in the comment content. In some embodiments, the notification module is also configured to send a notification message to the initiator of the processing flow and the handler associated with the comment content when the comment content is received in the comment area of the first document and the comment content is associated with the handler of the processing flow. In some embodiments, the apparatus for information processing further comprises a reminder module configured to receive comment content in the comment area of the first document, the comment content associated with a specific person in the comment content, and a specific person does not have the right to the first document for a limited time, a reminder message is sent to remind whether the permission to read of the first document is opened to a specific person. In some embodiments, the notification module is further configured to send a notification message to a specific person when it is determined that the permission to read of the first document is opened to a specific person.

Regarding the message sending when the cloud document comment content changes, in some embodiments, when the cloud document comment content changes, the approver can be notified to pay attention to the cloud document content change in time through the robot message sending technology.

### Scenario 1:

When a specific person is mentioned in the cloud document comment content, for example, by using the @symbol to mention a specific person, if the @person is an approval node person, the approval robot can send messages to the approval submitter and the @person. If the @person does not have cloud document permission or is not a relevant member of the approval node, it can prompt whether to enable the other party (@person) to have permission to read of the cloud document. If so, the document will be enabled to have permission to read, and the cloud document will notify the @person; if the document is not enabled to have permission to read, no notification will be given. The notification can be made in the form of a message card. After clicking the notification to view the details, it is possible to directly jump to the corresponding cloud document approval documentation in the approval application for approval. The content of the notification message can include the comment content, the applicant (also known as the drawer) submitting the approval, the approval reason, etc.

### Scenario 2:

When there is no @person in the content of the cloud document, notifications can be sent to the document submitter and the person to be approved. The notification content can include comments, the applicant (also known as the bill of lading person) who submitted the approval, the reason for approval, etc. Among them, in Scenario 1, the reasons why it is not sent to the person to be approved include: 1. @is a scene that clearly needs to be replied to, so it needs to be sent to the person to be @. 2. Sending it to the bill of lading person at the same time is to inform the document owner but does not need to disturb other approvers.

In this disclosure, the ability of the cloud document editing switch permission is called by the application in an interface manner, and the deep integration of the cloud document permission and the application is realized, so that the collaboration ability of the cloud document is the specific service logic and application scenario of the application.

When the service status is switched, for example, when the approval flow status is switched, the permission to edit of cloud documents is automatically adjusted. For example, when the permission to edit is turned off during approval, the permission is reopened if the approval is not passed, and after the approval is passed, the permission is turned off for automatic archiving. It is possible to set permission reasonably to avoid damaging service logic or causing information leakage, etc.

In some embodiments, for applications such as approval with cloud documents, the cloud document comment function can be opened by default during service processing such as approval to achieve better service collaboration such as approval.

Further, the present disclosure also provides a terminal comprising: at least one memory and at least one processor; wherein the memory for storing program code, the processor for calling the program code stored in the memory to perform the information processing method.

In addition, the present disclosure also provides a computer storage medium, which stores program code, and the program code is used to execute the above information processing method.

The information processing method and apparatus of the present disclosure have been described based on embodiments and application examples. In addition, the present disclosure also provides a terminal and a storage medium, the following description of these terminals and storage media.

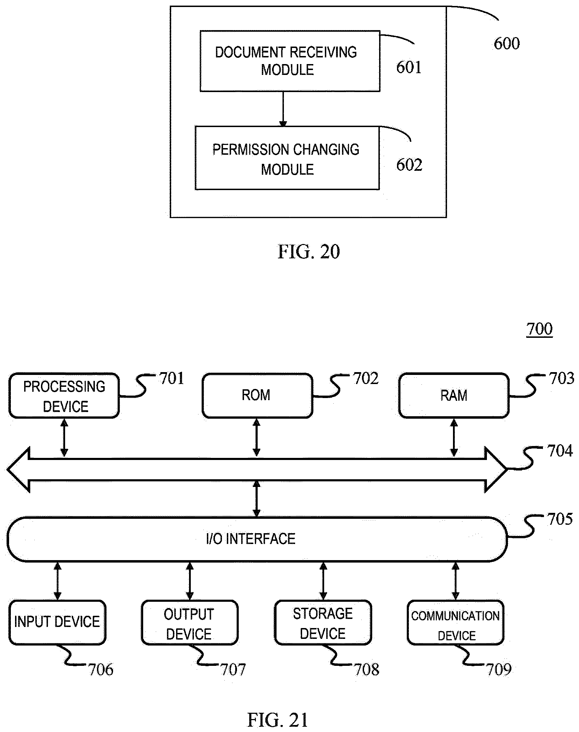

Referring now to FIG. 21, which shows a schematic structural diagram of an electronic device (e.g., a terminal device or server) 700 suitable for implementing embodiments of the present disclosure. Terminal devices in the present disclosure may include but are not limited to mobile phones, laptops, digital broadcast receivers, PDAs (personal digital assistants), PADs (tablets), PMPs (portable multimedia players), car terminals (e.g., car navigation terminals), and the like, as well as fixed terminals such as digital TVs, desktop computers, etc. The electronic device shown in FIG. 21 is only one example and should not bring any limitation on the functionality and scope of use of embodiments of the present disclosure.

As shown in FIG. 21, electronic device 700 may include processing devices (such as Central Processor, graphics processing unit, etc.) 701, which can perform various appropriate actions and processes based on programs stored in read-only memory (ROM) 702 or loaded from storage device 708 into random access memory (RAM) 703. In RAM 703, various programs and data required for the operation of electronic device 700 are also stored. Processing devices 701, ROM 702, and RAM 703 are connected to each other through bus 704. Input/output (I/O) interface 705 is also connected to bus 704.

Typically, the following devices can be connected to the I/O interface 705: input devices 706, including touch screens, touchpads, keyboards, mice, cameras, microphones, accelerometers, gyroscopes, etc.; output devices 707, including liquid crystal displays (LCDs), speakers, vibrators, etc.; storage devices 708, including magnetic tapes, hard disks, etc.; and communication devices 709. Communication devices 709 can allow electronic devices 700 to communicate wirelessly or wirelessly with other devices to exchange data. Although FIG. 21 shows electronic devices 700 with various devices, it should be understood that it is not required to implement or have all of the devices shown. More or fewer devices can be implemented or provided alternatively.

In particular, according to embodiments of the present disclosure, the process described above with reference to the flowchart may be implemented as a computer software program. For example, embodiments of the present disclosure include a computer program product comprising a computer program carried on a computer-readable medium, the computer program comprising program code for performing the method shown in the flowchart. In such embodiments, the computer program may be downloaded and installed from the network through the communication device 709, or installed from the storage device 708, or installed from the ROM 702. When the computer program is executed by the processing device 701, the above-described functions defined in the method of the present disclosure are performed.

It should be noted that the computer-readable medium described above in this disclosure can be a computer-readable signal medium or a computer-readable storage medium or any combination thereof. The computer-readable storage medium can be, for example, but not limited to, an electrical, magnetic, optical, electromagnetic, infrared, or semiconductor system, device, or any combination thereof. More specific examples of computer-readable storage media can include but are not limited to: an electrical connection with one or more wires, a portable computer disk, a hard disk, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof. In this disclosure, a computer-readable storage medium can be any tangible medium containing or storing a program that can be used by or in conjunction with an instruction execution system, device, or device. In this disclosure, a computer-readable signal medium can include a data signal propagated in a baseband or as part of a carrier wave, which carries computer-readable program code. Such propagated data signals can take many forms, including but not limited to electromagnetic signals, optical signals, or any suitable combination thereof. Computer-readable signal media can also be any computer-readable medium other than computer-readable storage media, which can send, propagate, or transmit programs for use by or in conjunction with instruction execution systems, devices, or devices. The program code contained on the computer-readable medium can be transmitted using any suitable medium, including but not limited to: wires, optical cables, RF (radio frequency), etc., or any suitable combination thereof.

In some embodiments, the client and server may communicate using any currently known or future developed network protocol such as HTTP (HyperText Transfer Protocol) and may be interconnected with any form or medium of digital data communication (e.g., a communication network). Examples of communication networks include local area networks ("LANs"), wide area networks ("WANs"), the Internet (e.g., the Internet), and end-to-end networks (e.g., ad hoc end-to-end networks), as well as any currently known or future developed networks.

The computer-readable medium can be included in the electronic device, or it can exist alone and not assembled into the electronic device.

The computer-readable medium carries one or more programs, and when the one or more programs are executed by the electronic device, the electronic device performs the method disclosed above.

Computer program code for performing the operations of the present disclosure may be written in one or more programming languages, or combinations thereof, including Object Oriented programming languages such as Java, Smalltalk, C++, and also conventional procedural programming languages such as "C" or similar programming languages. The program code may be executed entirely on the user's computer, partially on the user's computer, as a standalone software package, partially on the user's computer, or entirely on a remote computer or server. In the case of a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying drawings illustrate the architecture, functions, and operations of systems, methods, and computer program products that may be implemented in accordance with various embodiments of the present disclosure, in this regard, each block in the flowchart or block diagram may represent a module, program segment, or portion of code that contains one or more executable instructions for implementing a specified logical function. It should also be noted that in some alternative implementations, the functions marked in the blocks may also occur in a different order than those marked in the figures. For example, two blocks represented in succession may actually be executed substantially in parallel, and they may sometimes be executed in the opposite order, depending on the function involved. It should also be noted that each block in the block diagram and/or flowchart, and combinations of blocks in the block diagram and/or flowchart, may be implemented using a dedicated hardware-based system that performs the specified function or operation, or may be implemented using a combination of dedicated hardware and computer instructions.

Described in the present embodiment relates to the disclosed unit may be implemented by way of software, may be implemented by way of hardware, wherein the name of the unit does not constitute a limitation on the unit itself in some cases.

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), system-on-chip (SOCs), complex programmable logic devices (CPLDs), and the like.

In the context of this disclosure, machine-readable media can be tangible media that can contain or store programs for use by or in conjunction with instruction execution systems, devices, or devices. Machine-readable media can be machine-readable signal media or machine-readable storage media. Machine-readable media can include, but are not limited to, electronic, magnetic, optical, electromagnetic, infrared, or semiconductor systems, devices, or devices, or any suitable combination thereof. More specific examples of machine-readable storage media may include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices, magnetic storage devices, or any suitable combination thereof.

[Example 1] of the present disclosure provides a method for information processing, comprising: determining a first application; establishing an association between the first application and a first online document; and performing a first processing on the first online document according to information related to the first application.

[Example 2] of the present disclosure provides a method in combination with [Example 1], wherein performing a first processing on the first online document according to information related to the first application comprises: performing the first processing on the first online document according to an identification, a type, and information related to a service node of the first application.

[Example 3] of the present disclosure provides a method in combination with [Example 1], wherein performing a first processing on the first online document according to information related to the first application comprises at least one of: processing at least one of display information, permission information or carried content data of the first online document according to a service node of the first application; processing at least one of a displayable content, a display format, and permission information of the first online document for a person associated with a service node of the first application according to information of the person; or generating the first online document or processing the carried content data of the first online document according to first application data associated with a service node of the first application.

[Example 4] of the present disclosure provides a method in combination with [Example 1], comprising: upon establishing the association between the first application and the first online document, displaying a document display area for displaying the first online document in a display interface of the first application.

[Example 5] of the present disclosure provides a method in combination of [Example 4], wherein the document display area is capable of presenting content of the first online document and is capable of browsing the content of the first online document according to an operation.

[Example 6] of the present disclosure provides a method in combination of [Example 4], wherein a display size and/or a display position of the document display area in the display interface are adjustable.

[Example 7] of the present disclosure provides a method in combination of [Example 6], wherein a frequency of adjusting the size of the document display area is not greater than a first predetermined frequency; or if the frequency of adjusting the size of the document display area exceeds a second predetermined frequency, the display interface is not refreshed.

[Example 8] of the present disclosure provides a method in combination of [Example 6], further comprising: if a length of the document display area in a first direction is greater than a predetermined length, in response to a first predetermined operation, adjusting the length of the document display area in the first direction according to the first predetermined operation.

[Example 9] of the present disclosure provides a method in combination of [Example 6], further comprising: in response to a control identification moving to a first side or a second side of the document display area, changing a style of the control identification, a position of the first or second side being able to be changed after the changing of the style of the control identification, to change a size of the document display area.

[Example 10] of the present disclosure provides a method in combination of [Example 5], wherein the document display area has a folded state and an unfolded state, and the document display area is switchable between the folded and unfolded states.

[Example 11] of the present disclosure provides a method in combination of [Example 10], wherein when the document display area is in the unfolded state, content of the first online document is displayed; or when the document display area is in the folded state, the content of the first online document is hidden and abbreviated information of the first online document is displayed.

[Example 12] of the present disclosure provides a method in combination of [Example 10], wherein the document display area has an associated display control identification, when the document display area is in the folded state, display control identification is used to unfold the document display area in response to a trigger, and when the document display area is in the unfolded state, the display control identification is used to fold the document display area in response to a trigger.

[Example 13] of the present disclosure provides a method in combination of [Example 12], wherein the display control identification is fixed at a target position of the display interface; and/or a display interface is fixed to the document display area upon the display control identification is triggered.

[Example 14] of the present disclosure provides a method in combination of [Example 6], wherein a size range of the document display area is predetermined; the method comprises: determining a target size according to an operation of adjusting the document display area, adjusting a display size of the document display area according to the target size; if the target size is greater than a maximum value of the size range, setting the size of the document display area to the maximum value of the size range; or if the target size is smaller than a minimum value of the size range, setting the size of the document display area to the minimum value of the size range.

[Example 15] of the present disclosure provides a method in combination of [Example 4], wherein a display size of the document display area is determined by: determining a reference size according to a data amount of content data carried by the first online document; if the reference size is within a predetermined size range, setting the display size of the document display area according to the reference size; if the reference size is greater than a maximum value of the size range, setting the display size of the document display area according to the maximum value of the size range.

[Example 16] of the present disclosure provides a method in combination of [Example 3], wherein processing permission information of the first online document comprises at least one of: (a) in response to establishing the association, or processing the first online document with the first application, assigning ownership of the first online document to the first application; (b) assigning ownership of the first online document to a creator of service data of the first application after the first processing of the first online document, or assigning the ownership to an owner of the first online document before establishing the association between the first online document and the first application; or (c) assigning ownership of the first online document to a predetermined person after associating the first online document with an archive address of a document storage center.

[Example 17] of the present disclosure provides a method in combination of [Example 3], wherein processing permission information of the first online document comprises: adjusting the permission information related to the first online document according to a service node and/or an operation type of an operation of an associated person of the service node.

[Example 18] of the present disclosure provides a method in combination of [Example 17], wherein adjusting the permission information related to the first online document according to a service node and/or an operation type of an operation of an associated person of the service node comprises at least one of: in response to a first processing of a current service node, modifying an owner of the first online document; in response to a second processing of the current service node, withdrawing a predetermined document permission of the associated person of a predetermined processing node; in response to a third processing of a current service node, assigning a corresponding permission of the first online document to a second person based on a permission for the first online document of a first person, and retaining the permission for the first online document of the first person, or withdrawing the permission for the first online document of first person, or changing the permission for the first online document of the first person, the first person comprises a person associated with the current service node, and the second person comprises a person associated with the third processing; or in response to a fourth processing of the current service node, assigning a predetermined document permission for a person associated with the fourth processing.

[Example 19] of the present disclosure provides a method in combination of [Example 17], wherein adjusting the permission information related to the first online document according to a service node and/or an operation type of an operation of an associated person of the service node comprises at least one of: in response to a creator of service data withdrawing a processing request for the service data of the first application, assigning ownership of the first online document to the creator, or to an owner of the first online document before establishing the association between the first online document and the first application; or, in response to an associated person of the service node rejecting processing request for the service data of the first application, withdrawing a permission for the first online document of the associated person of the service node; or, in response to the associated person of a service node transferring the service data of the first application to another person, assigning a corresponding document permission for the another person based on a permission of the associated person of the service node to the first online document; or, in response to the associated person of a service node adding a service node, assigning a corresponding document permission for an associated person of the added service node based on the permission for the first online document of the associated person of the service node; or, in response to a service node being removed, withdrawing or changing the permission for the first online document of the associated person of the removed service node; or, in response to the associated person of a service node roll a processing flow back to a previous service node before the service node, assigning a corresponding document permission for an associated person of the previous service node; or, in response to the service data of the first application being copied or shared to a third person, assigning a predetermined permission for the first online document to the third person.

[Example 20] of the present disclosure provides a method in combination of [Example 17], wherein adjusting the permission information related to the first online document according to a service node and/or an operation type of an operation of an associated person of the service node comprises at least one of: in response to a creator of the service data withdrawing a processing request for the service data of the first application, withdrawing a permission for the first online document of an associated person of a service node associated with the processing request; or, in response to a creator of the service data withdrawing the processing request for the service data of the first application, resetting a permission for the first online document, or, in response to an associated person of a service node rejecting the processing request for the service data of the first application, assigning ownership of the first online document to the creator, or to an owner of the first online document before establishing the association between the first online document and the first application; or, in response to an associated person of a service node transferring the service data of the first application to another person, assigning a corresponding document permission to the another person based on a permission for the first online document of the associated person of the service node, the document permission assigned to the another person being the permission for the first online document of the associated person of the service node, or the document permission assigned to the another person being a subset of the permission for the first online document of the associated person of the service node; or, in response to the associated person of a service node adding an additional service node, retaining or changing a permission for the first online document of the associated person of the service node; or, in response to service data of the first application being copied or shared to a third person, assigning a predetermined permission for the first online document to the third person, the predetermined permission being a permission to view.

[Example 21] of the present disclosure provides a method in combination of [Example 1], wherein during the first processing on the first online document, an associated person in a current service node who has a permission to edit for the first online document can edit the first online document, and an associated person who is not in the current service node or has no permission to edit for the first online document cannot edit the first online document.

[Example 22] of the present disclosure provides a method in combination of [Example 3], wherein a validity period of a permission of for the first online document of an associated person of the service node is related to a duration of the service node, within a processing period of the service node, the permission for the first online document assigned to the associated person of the service node to is valid, outside the processing period of the service node, the permission for the first online document assigned to the associated person of the service node to is invalid or changed to another permission.

[Example 23] of the present disclosure provides a method in combination of [Example 3], a permission for the first online document is assigned to an associated person of the service node by at least one of: adding the associated person of the service node as a collaborator of the first online document and assigning a predetermined permission; or, enabling a link sharing function of the first online document, the link sharing function used to indicate that a user obtaining a sharing link of the first online document has a predetermined permission, and a user obtaining the sharing link accessing the first online document according to an access restriction condition of the link sharing.

[Example 24] of the present disclosure provides a method in combination of [Example 23], wherein a user obtaining the sharing link accessing the first online document according to an access restriction condition of the link sharing comprises: if an attribute of the user obtaining the sharing link satisfies a predetermined condition, enabling the user obtaining the sharing link to access the first online document.

[Example 25] of the present disclosure provides a method in combination of [Example 1], wherein after performing the first processing on the first online document according to the information related to the service node of the first application, the permission for the first online document of an associated person of the service node is withdrawn.

[Example 26] of the present disclosure provides a method in combination of [Example 3], wherein content data carried by the first online document includes processing abstract information for characterizing information related to the service processing.

[Example 27] of the present disclosure provides a method in combination of [Example 26], wherein the information related to the service processing characterized by the processing abstract information comprises at least one of: a link of the processing node or the first application, processing progress information, processing time information, handler information, or document change record information of the first online document.

[Example 28] of the present disclosure provides a method in combination of [Example 26], wherein processing carried content data of the first online document according to a service node of the first application comprises: updating the processing abstract information according to a processing operation of the service data by an associated person of the service node of the first application; displaying the processing abstract information or a link to the processing abstract information within the first online document; or, displaying, within the first online document, a portion of the processing abstract information for which an associated person of a current service node has a permission to view; or, displaying a second document or a link to a second document within the first online document, the second document recording the processing abstract information; or, upon completion of the first processing of the first online document, displaying the processing abstract information within the first online document.

[Example 29] of the present disclosure provides a method in combination of [Example 1], the establishing an association between the first application and the first online document comprises: in response to an operation of establishing the association, determining whether a creator of service data of the first application is an owner of the first online document; if so, establishing the association; if not, displaying prompt information; or, in response to the operation of establishing the association, determining whether the creator of the service data of the first application has a permission assigned by the owner of the first online document; if so, establishing the association; if not, displaying a prompt message.

[Example 30] of the present disclosure provides a method in combination of [Example 29], wherein the prompt information displays least one of: contact information of the owner of the first online document, a service card of the owner of the first online document, a control for contacting the owner of the first online document after being triggered, an entrance for applying to the owner for transferring ownership, or an entrance for applying to the owner for associating the first online document with the first application.

[Example 31] of the present disclosure provides a method in combination of [Example 30] further comprising: in response to the entrance for applying for transferring ownership being triggered or the application entrance for applying for associating the first online document with the first application being triggered, sending a notification message to the owner, the notification message comprising at least one of: information of the first application, information of the first online document, or remark information of the creator.

[Example 32] of the present disclosure provides a method in combination of [Example 1], wherein establishing an association between the first application and the first online document comprises: adding the first online document to a display interface of the first application or pre-configuring the association between the first application and the first online document.

[Example 33] of the present disclosure provides a method in combination of [Example 1], wherein establishing an association between the first application and the first online document further comprises: determining a first archive address associated with a service data template of the first application, wherein the first archive address is an archive address of a document storage center, the first archive address is used to associate with a target online document, the target online document being an online document associated with service data established based on the service data template; associating the first online document with the first archive address at a predetermined timing; and/or, in response to an operation of adding the first online document in the display interface of the first application, displaying an archive address selection page of a document storage center, and associating the first online document with a selected second archive address at a predetermined timing according to the second archive address.

[Example 34] of the present disclosure provides a method in combination of [Example 33], wherein the predetermined timing comprises reaching or completing a predetermined service node of the first application.

[Example 35] of the present disclosure provides a method in combination of [Example 1], prior to determining the first application, further comprising: in response to a creation operation, setting a service node of the first application and a document permission of an associated person of the service node.

[Example 36] of the present disclosure provides a method in combination of [Example 35], wherein the document permission of the associated person of the service node is set according to at least one of: a function of the service node, a role of the associated person, a type of the first online document, or a type of the first application.

[Example 37] of the present disclosure provides a method in combination of [Example 1], prior to determining the first application, further comprising: creating a service data template having a control for adding an online document, all or part of service data of the first application established based on the service data template.

[Example 38] of the present disclosure provides a method in combination of [Example 1], wherein the first processing of the first online document is performed based on information related to a service node of the first application, wherein the information related to the service node comprises at least one of: a service node, information of an associated person of the service node, or service data associated with the service node.

[Example 39] of the present disclosure provides a method in combination of [Example 1], wherein if there is a first person associated with two or more service nodes of the first application; after the first person has processed the first online document at an associated first service node, and before a start of a second service node associated with the first person that has not started, if content of the first online document changes, the first person needs to process the first online document at the second service node; or, after the first person processes the first online document at the associated first service node and before a start of a second service node associated with the first person, if the content of the first online document has no change, the first person has no need to process the first online document at the second service node.

[Example 40] of the present disclosure provides a method in combination of [Example 39], determining whether the content of the first online document changes based on a version number of the first online document, if the version number of the first online document changes, it is determined that the content of the first online document changes, or if the version number of the first online document has no change, it is determined that the content of the first online document has no change.

[Example 41] of the present disclosure provides a method in combination of [Example 1], wherein the first application is associated with first service logic, the first application processes service data of the first application according to the first service logic, and the first processing performed on the first online document is related to the first service logic.

[Example 42] of the present disclosure provides a method in combination of [Example 1], wherein the first application comprises a standalone application, an embedded or other program-based subroutine, or an applet.

[Example 43] of the present disclosure provides a method in combination of [Example 1], further comprising: displaying service data of the first application associated with the first online document in target communication software of a person associated with a service node of the first application.

[Example 44] of the present disclosure provides a method in combination of [Example 43], wherein the person associated with the service node comprises a target person without a target permission for the first application; and the method comprises: processing the service data in response to an operation by the target person on the first online document displayed by the target communication software.

[Example 45] of the present disclosure provides a method in combination of [Example 1], wherein the first application comprises an approval program, and information related to a service node comprises more than one approval node and/or a person associated with the approval node; or, the first application comprises a reporting program, and the information related to the service node comprises more than one reporting node and/or a person associated with the reporting node; or, the first application comprises a project management program, and the information related to the service node comprises more than one project processing node and/or a person associated with the project processing node.

[Example 46] of the present disclosure provides a method for service processing based on online document, comprising: in response to a first operation, displaying service data to be processed, wherein the service data to be processed is associated with a first online document; and in response to a second operation, processing the service data to be processed according to the first online document.

[Example 47] of the present disclosure provides a method in combination of [Example 46], wherein processing the service data to be processed according to the first online document comprises: the second operation is performed based on the first online document, content and/or permission information of the first online document is related to a service node associated with the service data to be processed and/or an associated person of the service node.

[Example 48] of the present disclosure provides a method for data processing based on online document, comprising: creating a service data template in response to a first creation event, wherein the service data template has a control for associating an online document; wherein the service data template is used to generate a service processing form or a service processing flow, and the generated service processing form or service processing flow has a control for associating an online document.

[Example 49] of the present disclosure provides a method in combination of [Example 48], wherein creating a service data template in response to a first creation event comprises: in response to a permission setting event, determining an operation permission for the online document of a person associated with a service processing node of the service data template, the operation permission applied to all online document added via the control of the service data template.

[Example 50] of the present disclosure provides a method in combination of [Example 48], wherein creating a service data template in response to a first creation event comprises: in response to an address setting event, determining a first archive address associated with the service data template; wherein the first archive address is an address of a document storage center, the first archive address is used to associate with a target online document, and the target online document is an online document associated via the control.

[Example 51] of the present disclosure provides an apparatus for information processing comprising: a determination unit configured for determining a first application; a creation unit configured for establishing an association between the first application and a first online document; and a control unit configured for performing a first processing on the first online document according to information related to the first application.

[Example 52] of the present disclosure provides an apparatus for service processing based on online document, comprising: a display unit configured for, in response to a first operation, displaying service data to be processed, wherein the service data to be processed is associated with a first online document; and a processing unit configured for, in response to a second operation, processing the service data to be processed according to the first online document.

[Example 53] of the present disclosure provides an apparatus for data processing based on online document, comprising: a creation unit configured for creating a service data template in response to a first creation event; and the service data template used to generate a service processing form or a service processing flow, and the generated service processing form or service processing flow has a control for associating an online document.

[Example 54] of the present disclosure provides a terminal comprising: at least one memory and at least one processor; wherein the at least one memory is configured to store program code, and the at least one processor is configured to call the program code stored in the at least one memory to execute the method according to any of [Example 1] to [Example 50].

[Example 55] of the present disclosure provides a storage medium for storing program code, the program code configured for performing the method of any of [Example 1] to [Example 50].

The technical features in the above examples can also be combined in other ways without contradiction.

According to one or more embodiments of the present disclosure, there is provided an information processing method comprising: creating a first processing item having a first online document in response to a first operation event; triggering a processing flow of the first processing item in response to the second operation event.

According to one or more embodiments of the present disclosure, there is provided an information processing method, in response to a first operation event, before creating a first processing item, further comprising: in response to a flow creation operation, setting the service processing node of the processing flow and document permission of the handler of the service processing node.

According to one or more embodiments of the present disclosure, there is provided an information processing method, prior to creating a first processing item in response to a first operation event, further comprising: creating an item template for processing an item having a control for adding an online document in the item template; the first processing item is established based on the item template.

According to one or more embodiments of the present disclosure, there is provided an information processing method, further comprising: displaying the first processing item in a control of the target communication software of the handler of the node of the processing flow.

According to one or more embodiments of the present disclosure, there is provided an information processing method having a document display area for displaying the first online document in a display interface of the first processing item, the document display area, the size and/or position of the document display area is adjustable.

According to one or more embodiments of the present disclosure, there is provided an information processing method, the creator of the first processing item is the owner of the first online document, and after triggering the processing flow of the first processing item, ownership of the first online document is transferred from the creator of the first processing item to the first application; after the processing flow of the first processing item is completed, ownership of the first online document is returned to the creator of the first processing item.

According to one or more embodiments of the present disclosure, there is provided an information processing method in which, during execution of the processing flow, the permission to edit for the first online document is only opened to a handler with permission to edit in a current service processing node of the processing flow.

According to one or more embodiments of the present disclosure, there is provided an information processing method, comprising: receiving a first document for use in a processing flow, wherein before receiving the first document, the author of the first document has a first right to the first document; after receiving the first document, changing the permission enjoyed by the author to the first document to a second permission, the second permission being different from the first permission.

According to one or more embodiments of the present disclosure, the first permission is a permission to read and permission to edit, the second permission is a permission to read.

According to one or more embodiments of the present disclosure, after receiving the first document, the processing node in the processing flow of the first document enjoys predetermined permission.

According to one or more embodiments of the present disclosure, when the first document is not through the processing flow or returned to the processing flow initiator, the author of the first document by the second permission for the first permission is changed.

According to one or more embodiments of the present disclosure, when a first handler in a node of the processing flow transfers the processing task to another person, the another person has the same rights to the first document as the first handler has the same rights to the first document before the transfer.

According to one or more embodiments of the present disclosure, when a first handler in a node of the processing flow adds a task node to another person, the another person and the first handler have the same rights to the first document. According to one or more embodiments of the present disclosure, when the task node corresponding to the first handler in the node of the processing flow is deleted, the first handler's rights to the first document are withdrawn.

According to one or more embodiments of the present disclosure, when the processing flow proceeds from the current node to the next node, the first handler of the current node changes the permission of the first document from the first permission for the second permission, and the second handler of the next node changes the permission of the first document from the second permission for the first permission.

According to one or more embodiments of the present disclosure, when the processing flow returns from the current node to the previous node, the first handler of the previous node changes the permission of the first document from the second permission for the first permission, and the second handler of the current node changes the permission of the first document from the first permission for the second permission.

According to one or more embodiments of the present disclosure, further comprising: receiving comment content in the comment area of the first document, and the comment content is not associated with any person in the comment content, sending a notification message to the processing flow initiator and handler.

According to one or more embodiments of the present disclosure, further comprising: receiving comment content in the comment section of the first document, and the comment content in the comment content associated with the processing flow of the handler, sending a notification message to the processing flow initiator and the handler associated with the comment content.

According to one or more embodiments of the present disclosure, further comprising: receiving comment content in the comment area of the first document, the comment content in the comment content associated with a particular person, and the particular person when the first document is not entitled to limit, a reminder message is sent to remind whether to open the permission to read of the first document to the particular person.

According to one or more embodiments of the present disclosure, when determining the opening of the first document to the particular person readable permission, send a notification message to the particular person.

According to one or more embodiments of the present disclosure, there is provided an apparatus for information processing comprising: a document receiving module configured to receive a first document for processing flow, wherein, prior to receiving the first document, the author of the first document has a first right to the first document; permission change module configured to, after receiving the first document, the author of the first document has the right to change to a second permission, the second permission is different from the first permission.

According to one or more embodiments of the present disclosure, there is provided an information processing method, characterized by comprising: prior to the processing request on a first file corresponding to a predetermined processing node, in response to a user operation, determining a first file target save address, so that the first file after the processing request is completed, is saved to the target save address.

According to one or more embodiments of the present disclosure, there is provided an information processing method comprising: before the predetermined node, in response to a user operation, determining the target save address of the first file; sending a processing request about the first file so that the processing request is processed; wherein the target save address is the save address of the first file after the processing request is processed.

According to one or more embodiments of the present disclosure, the processing request includes address information of the target save address. According to one or more embodiments of the present disclosure, if the first file is a document, the information processing method further comprises: displaying processing information corresponding to the processing request at a predetermined position within the document after the processing request is processed.

According to one or more embodiments of the present disclosure, the processing information includes link information, the link information is configured to be responsive to a user operation of the display process details information.

According to one or more embodiments of the present disclosure, the processing details information includes at least one of the following information: processing node information, handler information, processing opinion information, or processing time information.

According to one or more embodiments of the present disclosure, the information processing method further comprising: storing a file save directory in advance; the determining the target save address of the first file in response to a user operation comprises: in response to a user operation of the file save directory, determining the target save address of the first file.

According to one or more embodiments of the present disclosure, there is provided an information processing method, characterized by comprising: a determining unit for, prior to processing a request for a first file corresponding to any node, in response to a user operation, determining a target address of the first file is saved, so that the first file after the processing request is completed, is saved to the target save address.

According to one or more embodiments of the present disclosure, there is provided an apparatus for information processing comprising: a save address determination unit configured to determine the target save address of the first file in response to user operations before the predetermined node; a request sending unit configured to send the processing request about the first file so that the processing request is processed; wherein the target save address is the save address of the first file after the processing request is processed.

According to one or more embodiments of the present disclosure, if the first file is a document, the apparatus for information processing further comprising: a processing information display unit configured to process after the processing request is processed, the predetermined position within the document display processing information corresponding to the processing request.

According to one or more embodiments of the present disclosure, the apparatus for information processing further comprising: a directory storage unit for storing a file save directory in advance; in response to a user operation, determining the target save address of the first file, comprising: in response to a user operation of the file save directory, determining the target save address of the first file.

According to one or more embodiments of the present disclosure, there is provided an electronic device comprising: at least one memory and at least one processor; wherein the memory for storing program code, the processor for calling the program code stored in the memory to cause the electronic device to perform a method of providing information processing according to one or more embodiments of the present disclosure.

According to one or more embodiments of the present disclosure, there is provided a non-transitory computer storage medium, the non-transitory computer storage medium stores program code, the program code is executed by a computer device, so that the computer device performs a method of providing information processing according to one or more embodiments of the present disclosure.

The above description is only the preferred embodiment of the present disclosure and an explanation of the technical principles used. Those skilled in the art should understand that the scope of the disclosure involved in this disclosure is not limited to the specific combination of the technical features of the above technical solutions, but should also cover other technical solutions formed by any combination of the above technical features or equivalent features without departing from the above disclosure concept. For example, the technical solutions formed by replacing the above features with (but not limited to) technical features with similar functions disclosed in this disclosure.

In addition, although the operations are depicted in a specific order, this should not be understood as requiring these operations to be performed in the specific order shown or in sequential order. Under certain circumstances, multitasking and parallel processing may be advantageous. Similarly, although several specific implementation details are included in the above discussion, these should not be construed as limiting the scope of the present disclosure. Certain features described in the context of individual embodiments may also be implemented in combination in a single embodiment. Conversely, various features described in the context of a single embodiment may also be implemented in multiple embodiments individually or in any suitable sub-combination.

Although the subject matter has been described in language specific to structural features and/or methodological logical acts, it should be understood that the subject matter defined in the appended claims is not necessarily limited to the particular features or acts described above. Rather, the particular features and acts described above are merely exemplary forms of implementation of the claims.

## Claims

1. A method for information processing comprising:
determining a first application;
establishing an association between the first application and a first online document; and
performing a first processing on the first online document according to information related to the first application.

2. The method of claim 1, wherein performing a first processing on the first online document according to information related to the first application comprises:
performing the first processing on the first online document according to an identification, a type, and information related to a service node of the first application.

3. The method of claim 1, wherein performing a first processing on the first online document according to information related to the first application comprises at least one of:
processing at least one of display information, permission information or carried content data of the first online document according to a service node of the first application;
processing at least one of a displayable content, a display format, and permission information of the first online document for a person associated with a service node of the first application according to information of the person; or
generating the first online document or processing the carried content data of the first online document according to first application data associated with a service node of the first application.

4. The method of claim 1, comprising:
upon establishing the association between the first application and the first online document, displaying a document display area for displaying the first online document in a display interface of the first application.

5. The method of claim 4, wherein the document display area is capable of presenting content of the first online document and is capable of browsing the content of the first online document according to an operation.

6. The method of claim 4, wherein a display size and/or a display position of the document display area in the display interface are adjustable.

7. The method of claim 6, wherein
a frequency of adjusting the size of the document display area is not greater than a first predetermined frequency; or
if the frequency of adjusting the size of the document display area exceeds a second predetermined frequency, the display interface is not refreshed.

8. The method of claim 6, further comprising:
if a length of the document display area in a first direction is greater than a predetermined length, in response to a first predetermined operation, adjusting the length of the document display area in the first direction according to the first predetermined operation.

9. The method of claim 6, further comprising:
in response to a control identification moving to a first side or a second side of the document display area, changing a style of the control identification, a position of the first or second side being able to be changed after the changing of the style of the control identification, to change a size of the document display area.

10. The method of claim 5, wherein the document display area has a folded state and an unfolded state, and the document display area is switchable between the folded and unfolded states.

11. The method of claim 10, wherein
when the document display area is in the unfolded state, content of the first online document is displayed; or
when the document display area is in the folded state, the content of the first online document is hidden and abbreviated information of the first online document is displayed.

12. The method of claim 10, wherein the document display area has an associated display control identification,
when the document display area is in the folded state, display control identification is used to unfold the document display area in response to a trigger, and
when the document display area is in the unfolded state, the display control identification is used to fold the document display area in response to a trigger.

13. The method of claim 12, wherein
the display control identification is fixed at a target position of the display interface; and/or
a display interface is fixed to the document display area upon the display control identification is triggered.

14. The method of claim 6, wherein
a size range of the document display area is predetermined;
the method comprises:
determining a target size according to an operation of adjusting the document display area, adjusting a display size of the document display area according to the target size;
if the target size is greater than a maximum value of the size range, setting the size of the document display area to the maximum value of the size range; or
if the target size is smaller than a minimum value of the size range, setting the size of the document display area to the minimum value of the size range.

15. The method of claim 4, wherein a display size of the document display area is determined by:
determining a reference size according to a data amount of content data carried by the first online document;
if the reference size is within a predetermined size range, setting the display size of the document display area according to the reference size;
if the reference size is greater than a maximum value of the size range, setting the display size of the document display area according to the maximum value of the size range.

16. The method of claim 3, wherein processing permission information of the first online document comprises at least one of:
(a) in response to establishing the association, or processing the first online document with the first application, assigning ownership of the first online document to the first application;
(b) after performing the first processing on the first online document, assigning ownership of the first online document to a creator of service data of the first application, or assigning the ownership to an owner of the first online document who is an owner before establishing the association between the first online document and the first application; or
(c) assigning ownership of the first online document to a predetermined person after associating the first online document with an archive address of a document storage center.

17. The method of claim 3, wherein processing permission information of the first online document comprises:
adjusting the permission information related to the first online document according to a service node and/or an operation type of an operation of an associated person of the service node.

18. The method of claim 17, wherein adjusting the permission information related to the first online document according to a service node and/or an operation type of an operation of an associated person of the service node comprises at least one of:
in response to a first processing of a current service node, modifying an owner of the first online document;
in response to a second processing of the current service node, withdrawing a predetermined document permission of the associated person of a predetermined processing node;
in response to a third processing of a current service node, assigning a corresponding permission of the first online document to a second person based on a permission for the first online document of a first person, and retaining the permission for the first online document of the first person, or withdrawing the permission for the first online document of the first person, or changing the permission for the first online document of the first person, the first person comprises a person associated with the current service node, and the second person comprises a person associated with the third processing; or
in response to a fourth processing of the current service node, assigning a predetermined document permission for a person associated with the fourth processing.

19. The method of claim 17, wherein adjusting the permission information related to the first online document according to a service node and/or an operation type of an operation of an associated person of the service node comprises at least one of:
in response to a creator of service data withdrawing a processing request for the service data of the first application, assigning ownership of the first online document to the creator, or to an owner of the first online document before establishing the association between the first online document and the first application; or, in response to an associated person of the service node rejecting processing request for the service data of the first application, withdrawing a permission for the first online document of the associated person of the service node; or,
in response to the associated person of the service node transferring the service data of the first application to another person, assigning, based on a permission of the associated person of the service node for the first online document, a corresponding document permission to the another person; or,
in response to the associated person of a service node adding a service node, assigning a corresponding document permission for an associated person of the added service node based on the permission for the first online document of the associated person of the service node; or,
in response to a service node being removed, withdrawing or changing the permission for the first online document of the associated person of the removed service node; or,
in response to the associated person of a service node rolling a processing flow back to a previous service node before the service node, assigning a corresponding document permission for an associated person of the previous service node; or,
in response to the service data of the first application being copied or shared to a third person, assigning a predetermined permission for the first online document to the third person.

20. The method of claim 17, wherein adjusting the permission information related to the first online document according to a service node and/or an operation type of an operation of an associated person of the service node comprises at least one of:
in response to a creator of the service data withdrawing a processing request for the service data of the first application, withdrawing a permission for the first online document of an associated person of a service node associated with the processing request; or,
in response to a creator of the service data withdrawing the processing request for the service data of the first application, resetting a permission for the first online document, or,
in response to an associated person of a service node rejecting the processing request for the service data of the first application, assigning ownership of the first online document to the creator, or to an owner of the first online document before establishing the association between the first online document and the first application; or,
in response to an associated person of a service node transferring the service data of the first application to another person, assigning a corresponding document permission to the another based on a permission for the first online document of the associated person of the service node, the document permission assigned to the another person being the permission for the first online document of the associated person of the service node, or the document permission assigned to the another person being a subset of the permission for the first online document of the associated person of the service node; or,
in response to the associated person of a service node adding an additional service node, retaining or changing a permission for the first online document of the associated person of the service node; or,
in response to service data of the first application being copied or shared to a third person, assigning a predetermined permission for the first online document to the third person, the predetermined permission being a permission to view.

21. The method of claim 1, wherein
during the first processing on the first online document, an associated person in a current service node who has a permission to edit for the first online document can edit the first online document, and an associated person who is not in the current service node or has no permission to edit for the first online document cannot edit the first online document.

22. The method of claim 3, wherein
a validity period of a permission of for the first online document of an associated person of the service node is related to a duration of the service node,
within a processing period of the service node, the permission for the first online document assigned to the associated person of the service node to is valid,
outside the processing period of the service node, the permission for the first online document assigned to the associated person of the service node to is invalid or changed to another permission.

23. The method of claim 3, a permission for the first online document is assigned to an associated person of the service node by at least one of:
adding the associated person of the service node as a collaborator of the first online document and assigning a predetermined permission; or,
enabling a link sharing function of the first online document, the link sharing function used to indicate that a user obtaining a sharing link of the first online document has a predetermined permission, and a user obtaining the sharing link accessing the first online document according to an access restriction condition of the link sharing.

24. The method of claim 23, wherein a user obtaining the sharing link accessing the first online document according to an access restriction condition of the link sharing comprises:
if an attribute of the user obtaining the sharing link satisfies a predetermined condition, enabling the user obtaining the sharing link to access the first online document.

25. The method of claim 1, wherein
after performing the first processing on the first online document according to the information related to the service node of the first application, the permission for the first online document of an associated person of the service node is withdrawn.

26. The method of claim 3, wherein
content data carried by the first online document includes processing abstract information for characterizing information related to the service processing.

27. The method of claim 26, wherein the information related to the service processing **characterized by** the processing abstract information comprises at least one of: a link of the processing node or the first application, processing progress information, processing time information, handler information, or document change record information of the first online document.

28. The method of claim 26, wherein processing carried content data of the first online document according to a service node of the first application comprises:
updating the processing abstract information according to a processing operation of the service data by an associated person of the service node of the first application;
displaying the processing abstract information or a link to the processing abstract information within the first online document; or,
displaying, within the first online document, a portion of the processing abstract information for which an associated person of a current service node has a permission to view; or,
displaying a second document or a link to a second document within the first online document, the second document recording the processing abstract information; or,
upon completion of the first processing of the first online document, displaying the processing abstract information within the first online document.

29. The method of claim 1, the establishing an association between the first application and the first online document comprises:
in response to an operation of establishing the association, determining whether a creator of service data of the first application is an owner of the first online document; if so, establishing the association; if not, displaying prompt information;
or,
in response to the operation of establishing the association, determining whether the creator of the service data of the first application has a permission assigned by the owner of the first online document; if so, establishing the association; if not, displaying a prompt message.

30. The method of claim 29, wherein
the prompt information displays least one of: contact information of the owner of the first online document, a service card of the owner of the first online document, a control for contacting the owner of the first online document after being triggered, an entrance for applying to the owner for transferring ownership, or an entrance for applying to the owner for associating the first online document with the first application.

31. The method of claim 30 further comprising:
in response to the entrance for applying for transferring ownership being triggered or the application entrance for applying for associating the first online document with the first application being triggered, sending a notification message to the owner, the notification message comprising at least one of: information of the first application, information of the first online document, or remark information of the creator.

32. The method of claim 1, wherein establishing an association between the first application and the first online document comprises: adding the first online document to a display interface of the first application or pre-configuring the association between the first application and the first online document.

33. The method of claim 1, wherein establishing an association between the first application and the first online document further comprises:
determining a first archive address associated with a service data template of the first application, wherein the first archive address is an archive address of a document storage center, the first archive address is used to associate with a target online document, the target online document being an online document associated with service data established based on the service data template; associating the first online document with the first archive address at a predetermined timing;
and/or,
in response to an operation of adding the first online document in the display interface of the first application, displaying an archive address selection page of a document storage center, and associating the first online document with a selected second archive address at a predetermined timing according to the second archive address.

34. The method of claim 33, wherein the predetermined timing comprises reaching or completing a predetermined service node of the first application.

35. The method of claim 1, prior to determining the first application, further comprising: in response to a creation operation, setting a service node of the first application and a document permission of an associated person of the service node.

36. The method of claim 35, wherein
the document permission of the associated person of the service node is set according to at least one of: a function of the service node, a role of the associated person, a type of the first online document, or a type of the first application.

37. The method of claim 1, prior to determining the first application, further comprising: creating a service data template having a control for adding an online document, all or part of service data of the first application established based on the service data template.

38. The method of claim 1, wherein the first processing of the first online document is performed based on information related to a service node of the first application, wherein the information related to the service node comprises at least one of: a service node, information of an associated person of the service node, or service data associated with the service node.

39. The method of claim 1, wherein
if there is a first person associated with two or more service nodes of the first application;
after the first person has processed the first online document at an associated first service node, and before a start of a second service node associated with the first person that has not started, if content of the first online document changes, the first person needs to process the first online document at the second service node; or,
after the first person processes the first online document at the associated first service node and before a start of a second service node associated with the first person, if the content of the first online document has no change, the first person has no need to process the first online document at the second service node.

40. The method of claim 39,
determining whether the content of the first online document changes based on a version number of the first online document,
if the version number of the first online document changes, it is determined that the content of the first online document changes, or
if the version number of the first online document has no change, it is determined that the content of the first online document has no change.

41. The method of claim 1, wherein
the first application is associated with first service logic, the first application processes service data of the first application according to the first service logic, and the first processing performed on the first online document is related to the first service logic.

42. The method of claim 1, wherein the first application comprises a standalone application, an embedded or other program-based subroutine, or an applet.

43. The method of claim 1, further comprising: displaying service data of the first application associated with the first online document in target communication software of a person associated with a service node of the first application.

44. The method of claim 43, wherein
the person associated with the service node comprises a target person without a target permission for the first application; and
the method comprises: processing the service data in response to an operation by the target person on the first online document displayed by the target communication software.

45. The method of claim 1, wherein
the first application comprises an approval program, and information related to a service node comprises more than one approval node and/or a person associated with the approval node; or,
the first application comprises a reporting program, and the information related to the service node comprises more than one reporting node and/or a person associated with the reporting node; or,
the first application comprises a project management program, and the information related to the service node comprises more than one project processing node and/or a person associated with the project processing node.

46. A method for service processing based on online document, comprising:
in response to a first operation, displaying service data to be processed, wherein the service data to be processed is associated with a first online document; and
in response to a second operation, processing the service data to be processed according to the first online document.

47. The method of claim 46, wherein processing the service data to be processed according to the first online document comprises:
the second operation is performed based on the first online document, content and/or permission information of the first online document is related to a service node associated with the service data to be processed and/or an associated person of the service node.

48. A method for data processing based on online document, comprising:
creating a service data template in response to a first creation event, wherein the service data template has a control for associating an online document;
wherein the service data template is used to generate a service processing form or a service processing flow, and the generated service processing form or service processing flow has a control for associating an online document.

49. The method of claim 48, wherein creating a service data template in response to a first creation event comprises:
in response to a permission setting event, determining an operation permission for the online document of a person associated with a service processing node of the service data template, the operation permission applied to all online document added via the control of the service data template.

50. The method of claim 48, wherein creating a service data template in response to a first creation event comprises:
in response to an address setting event, determining a first archive address associated with the service data template;
wherein the first archive address is an address of a document storage center, the first archive address is used to associate with a target online document, and the target online document is an online document associated via the control.

51. An apparatus for information processing comprising:
a determination unit configured for determining a first application;
a creation unit configured for establishing an association between the first application and a first online document; and
a control unit configured for performing a first processing on the first online document according to information related to the first application.

52. An apparatus for service processing based on online document, comprising:
a display unit configured for, in response to a first operation, displaying service data to be processed, wherein the service data to be processed is associated with a first online document; and
a processing unit configured for, in response to a second operation, processing the service data to be processed according to the first online document.

53. An apparatus for data processing based on online document, comprising:
a creation unit configured for creating a service data template in response to a first creation event; and
the service data template used to generate a service processing form or a service processing flow, and the generated service processing form or service processing flow has a control for associating an online document.

54. A terminal comprising:
at least one memory and at least one processor;
wherein the at least one memory is configured to store program code, and the at least one processor is configured to call the program code stored in the at least one memory to execute a method according to any of claims 1 to 50.

55. A storage medium for storing program code, the program code configured for performing a method of any of claims 1 to 50.
